(19) 

Europäisches
Patentamt
European
Patent Office
Office européen
des brevets

(11) **EP 4 611 463 A1**

(12) **EUROPEAN PATENT APPLICATION**
published in accordance with Art. 153(4) EPC

(43) Date of publication:
**03.09.2025 Bulletin 2025/36**

(21) Application number: **24753618.8**

(22) Date of filing: **06.02.2024**

(51) International Patent Classification (IPC):
*H04W 72/25* (2023.01)    *H04W 56/00* (2009.01)
*H04W 74/08* (2024.01)    *H04L 5/00* (2006.01)
*H04W 92/18* (2009.01)

(52) Cooperative Patent Classification (CPC):
**H04L 5/00; H04W 56/00; H04W 72/25;**
**H04W 74/08; H04W 92/18**

(86) International application number:
**PCT/KR2024/001773**

(87) International publication number:
**WO 2024/167293 (15.08.2024 Gazette 2024/33)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **10.02.2023  KR 20230017991**
**16.02.2023  KR 20230020476**

(71) Applicants:
• **Hyundai Motor Company**
**Seoul 06797 (KR)**
• **Kia Corporation**
**Seoul 06797 (KR)**

(72) Inventor: **HONG, Ui Hyun**
**Hwaseong-si, Gyeonggi-do 18280 (KR)**

(74) Representative: **Isarpatent**
**Patent- und Rechtsanwälte**
**Barth Hassa Peckmann & Partner mbB**
**Friedrichstraße 31**
**80801 München (DE)**

(54) **METHOD AND DEVICE FOR TRANSMITTING SIDELINK SYNCHRONIZATION SIGNAL BLOCK IN UNLICENSED BAND**

(57)    Disclosed are a method and device for transmitting a sidelink synchronization signal block in an unlicensed band. A method for a first UE may comprise the steps of: identifying a plurality of S-SSB transmission time points within an S-SSB cycle on the basis of S-SSB configuration information; and executing an LBT operation at a first LBT execution time point before a first S-SSB transmission time point from among the plurality of S-SSB transmission time points.

【FIG. 12】

Processed by Luminess, 75001 PARIS (FR)

**Description**

[Technical Field]

The present disclosure relates to a sidelink communication technique, and more particularly, to a technique for transmitting sidelink synchronization signal block in an unlicensed band.

[Background Art]

A communication network (e.g. 5G communication network or 6G communication network) is being developed to provide enhanced communication services compared to the existing communication networks (e.g. long term evolution (LTE), LTE-Advanced (LTE-A), etc.). The 5G communication network (e.g. New Radio (NR) communication network) can support frequency bands both below 6GHz and above 6GHz. In other words, the 5G communication network can support both a frequency region 1 (FR1) and/or FR2 bands. Compared to the LTE communication network, the 5G communication network can support various communication services and scenarios. For example, usage scenarios of the 5G communication network may include enhanced Mobile BroadBand (eMBB), Ultra Reliable Low Latency Communication (URLLC), massive Machine Type Communication (mMTC), and the like.

The 6G communication network can support a variety of communication services and scenarios compared to the 5G communication network. The 6G communication network can meet the requirements of hyper-performance, hyper-bandwidth, hyper-space, hyper-precision, hyper-intelligence, and/or hyper-reliability. The 6G communication network can support diverse and wide frequency bands and can be applied to various usage scenarios such as terrestrial communication, non-terrestrial communication, sidelink communication, and the like.

Meanwhile, to improve sidelink communication, carrier aggregation (CA) operations, unlicensed band operations, FR2 band operations, and/or coexistence between LTE and NR may be considered. In particular, when sidelink communication is performed in an unlicensed band, methods to support the sidelink communication may be required. For operations in an unlicensed band, optimization of sidelink physical channel structures may be required. In addition, listen before talk (LBT) operations may need to be considered for sidelink communication in an unlicensed band.

[Disclosure]

[Technical Problem]

The present disclosure is directed to providing a method and an apparatus for transmitting sidelink synchronization signal block in an unlicensed band.

[Technical Solution]

A method of a first user equipment (UE), according to exemplary embodiments of the present disclosure for achieving the above-described objective, may comprise: identifying a plurality of sidelink synchronization signal block (S-SSB) transmission times within an S-SSB period based on S-SSB configuration information; performing a listen before talk (LBT) operation at a first LBT execution time prior to a first S-SSB transmission time among the plurality of S-SSB transmission times; and in response to the first LBT operation determined to have failed, performing a second LBT operation at a second LBT execution time prior to a second S-SSB transmission time among the plurality of S-SSB transmission times within the S-SSB period, and in response to the second LBT operation determined to have succeeded, transmitting an S-SSB to a second UE at the second S-SSB transmission time.

A number of a plurality of S-SSBs transmittable in the S-SSB period may remain constant, and may increase proportionally according to at least one of a frequency range (FR) or a subcarrier spacing (SCS).

The plurality of S-SSB transmission times within the S-SSB period may be divided into a first S-SSB transmission time group and a second S-SSB transmission time group.

A number of S-SSB transmission times included in each of the first S-SSB transmission time group and the second S-SSB transmission time group may be same, and each of the first S-SSB transmission time group and the second S-SSB transmission time group may include at least one S-SSB transmission time among the plurality of S-SSB transmission times within the S-SSB period.

The plurality of S-SSB transmission times within the S-SSB period may be consecutive with an equal time interval, and a first S-SSB transmission time in the first S-SSB transmission time group may start at a time delayed by a time offset from a start time of the S-SSB period.

A first S-SSB transmission time in the first S-SSB transmission time group may be delayed by a first time offset, and a first S-SSB transmission time in the second S-SSB transmission time group may be delayed by a second time offset.

The first time offset may represent a time difference between a start time of the S-SSB period and the first S-SSB transmission time in the first S-SSB transmission time group, and the second time offset may represent a time difference between a last S-SSB transmission time in the first S-SSB transmission time group and the first S-SSB transmission time in the second S-SSB transmission time group.

The first time offset may represent a time difference between a start time of the S-SSB period and the first S-SSB transmission time in the first S-SSB transmission time group, and the second time offset may represent a time difference between the start time of the S-SSB period and the first S-SSB transmission time in the second S-SSB transmission time group.

A method of a base station, according to exemplary embodiments of the present disclosure for achieving the above-described objective, may comprise: configuring sidelink synchronization signal block (S-SSB) listen before talk (LBT) execution time information indicating a time for performing an LBT operation for S-SSB transmission; configuring S-SSB transmission time information indicating a transmission time for the S-SSB transmission; generating S-SSB configuration information including the S-SSB LBT execution time information and the S-SSB transmission time information; and transmitting the S-SSB configuration information to a user equipment (UE).

A plurality of S-SSB transmission times within an S-SSB period may be divided into a first S-SSB transmission time group and a second S-SSB transmission time group.

A number of a plurality of S-SSB transmission times within the S-SSB period may increase in proportion to at least one of a frequency range (FR) or a subcarrier spacing (SCS).

A first user equipment (UE), according to exemplary embodiments of the present disclosure for achieving the above-described objective, may comprise: at least one processor, wherein the at least processor may cause the first UE to perform: identifying a plurality of sidelink synchronization signal block (S-SSB) transmission times within an S-SSB period based on S-SSB configuration information; performing a listen before talk (LBT) operation at a first LBT execution time prior to a first S-SSB transmission time among the plurality of S-SSB transmission times; and in response to the first LBT operation determined to have failed, performing a second LBT operation at a second LBT execution time prior to a second S-SSB transmission time among the plurality of S-SSB transmission times within the S-SSB period, and in response to the second LBT operation determined to have succeeded, transmitting an S-SSB to a second UE at the second S-SSB transmission time.

A number of a plurality of S-SSBs transmittable in the S-SSB period may remain constant, and may increase proportionally according to at least one of a frequency range (FR) or a subcarrier spacing (SCS).

The plurality of S-SSB transmission times within the S-SSB period may be divided into a first S-SSB transmission time group and a second S-SSB transmission time group.

A number of S-SSB transmission times included in each of the first S-SSB transmission time group and the second S-SSB transmission time group may be same, and each of the first S-SSB transmission time group and the second S-SSB transmission time group may include at least one S-SSB transmission time among the plurality of S-SSB transmission times within the S-SSB period.

The plurality of S-SSB transmission times within the S-SSB period may be consecutive with an equal time interval, and a first S-SSB transmission time in the first S-SSB transmission time group may start at a time delayed by a time offset from a start time of the S-SSB period.

A first S-SSB transmission time in the first S-SSB transmission time group may be delayed by a first time offset, and a first S-SSB transmission time in the second S-SSB transmission time group may be delayed by a second time offset.

The first time offset may represent a time difference between a start time of the S-SSB period and the first S-SSB transmission time in the first S-SSB transmission time group, and the second time offset may represent a time difference between a last S-SSB transmission time in the first S-SSB transmission time group and the first S-SSB transmission time in the second S-SSB transmission time group.

The first time offset may represent a time difference between a start time of the S-SSB period and the first S-SSB transmission time in the first S-SSB transmission time group, and the second time offset may represent a time difference between the start time of the S-SSB period and the first S-SSB transmission time in the second S-SSB transmission time group.

[Advantageous Effects]

According to the present disclosure, in sidelink communication over an unlicensed band, a terminal can configure S-SSB transmission times and an SSB period, and when an LBT operation of the terminal fails, the terminal can reduce a delay in S-SSB transmission. Accordingly, the SL communication can be performed efficiently, and the performance of the communication system can be improved.

[Description of Drawings]

FIG. 1 is a conceptual diagram illustrating scenarios of Vehicle-to-Everything (V2X) communications.

FIG. 2 is a conceptual diagram illustrating a first exemplary embodiment of a communication system.

FIG. 3 is a conceptual diagram illustrating a first exemplary embodiment of a communication node constituting a communication system.

FIG. 4 is a block diagram illustrating a first exemplary embodiment of communication nodes performing communication.

FIG. 5A is a block diagram illustrating a first exemplary embodiment of a transmission path.

FIG. 5B is a block diagram illustrating a first exemplary embodiment of a reception path.

FIG. 6 is a block diagram illustrating a first exemplary embodiment of a user plane protocol stack of a UE performing sidelink communication.

FIG. 7 is a block diagram illustrating a first exemplary embodiment of a control plane protocol stack of a UE performing sidelink communication.

FIG. 8 is a block diagram illustrating a second exemplary embodiment of a control plane protocol stack of a UE performing sidelink communication.

FIG. 9 is a conceptual diagram illustrating a first exemplary embodiment of a sidelink synchronization signal block in a communication system.

FIG. 10 is a conceptual diagram illustrating a first exemplary embodiment of a sidelink synchronization signal block transmission in a communication system.

FIG. 11 is a timing diagram illustrating a first exemplary embodiment of a communication method in an unlicensed band.

FIG. 12 is a conceptual diagram illustrating a first exemplary embodiment of synchronization signal block transmission in sidelink communication in an unlicensed band.

FIG. 13 is a conceptual diagram illustrating a second exemplary embodiment of synchronization signal block transmission in sidelink communication in an unlicensed band.

FIG. 14 is a conceptual diagram illustrating a third exemplary embodiment of synchronization signal block transmission in sidelink communication in an unlicensed band.

FIG. 15 is a conceptual diagram illustrating a fourth exemplary embodiment of synchronization signal block transmission in sidelink communication in an unlicensed band.

[Best mode of the Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In the present disclosure, '(re)transmission' may refer to 'transmission', 'retransmission', or 'transmission and retransmission', '(re)configuration' may refer to 'configuration', 'reconfiguration', or 'configuration and reconfiguration', '(re)connection' may refer to 'connection', 'reconnection', or 'connection and reconnection', and '(re)access' may refer to 'access', 're-access', or 'access and re-access'.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, exemplary embodiments of the present disclosure will be described in detail with reference to the accompanying drawings. In describing the disclosure, to facilitate the entire understanding of the disclosure, like numbers refer to like elements throughout the description of the figures and the repetitive description thereof will be omitted. The operations according to the exemplary embodiments described explicitly in the present disclosure, as well as combinations of the exemplary embodiments, extensions of the exemplary embodiments, and/or variations of the exemplary embodiments, may be performed. Some operations may be omitted, and a sequence of operations may be altered.

Even when a method (e.g. transmission or reception of a signal) to be performed at a first communication node among communication nodes is described in exemplary embodiments, a corresponding second communication node may perform a method (e.g. reception or transmission of the signal) corresponding to the method performed at the first communication node. That is, when an operation of a user equipment (UE) is described, a base station corresponding thereto may perform an operation corresponding to the operation of the UE. Conversely, when an operation of a base station is described, a corresponding UE may perform an operation corresponding to the operation of the base station.

The base station may be referred to by various terms such as NodeB, evolved NodeB, next generation node B (gNodeB), gNB, device, apparatus, node, communication node, base transceiver station (BTS), radio remote head (RRH), transmission reception point (TRP), radio unit (RU), road side unit (RSU), radio transceiver, access point, access node, and the like. The user equipment (UE) may be referred to by various terms such as terminal, device, apparatus, node, communication node, end node, access terminal, mobile terminal, station, subscriber station, mobile station, portable subscriber station, on-board unit (OBU), and the like.

In the present disclosure, signaling may be one or a combination of two or more of higher layer signaling, MAC signaling, and physical (PHY) signaling. A message used for higher layer signaling may be referred to as a 'higher layer message' or 'higher layer signaling message'. A message used for MAC signaling may be referred to as a 'MAC message' or 'MAC signaling message'. A message used for PHY signaling may be referred to as a 'PHY message' or 'PHY signaling message'. The higher layer signaling may refer to an operation of transmitting and receiving system information (e.g. master information block (MIB), system information block (SIB)) and/or an RRC message. The MAC signaling may refer to an operation of transmitting and receiving a MAC control element (CE). The PHY signaling may refer to an operation of transmitting and receiving control information (e.g. downlink control information (DCI), uplink control information (UCI), or sidelink control information (SCI)).

In the present disclosure, 'configuration of an operation (e.g. transmission operation)' may refer to signaling of configuration information (e.g. information elements, parameters) required for the operation and/or information indicating to perform the operation. 'configuration of information elements (e.g. parameters)' may refer to signaling of the information elements. In the present disclosure, 'signal and/or channel' may refer to signal, channel, or both signal and channel, and 'signal' may be used to mean 'signal and/or channel'.

A communication network to which exemplary embodiments are applied is not limited to that described below, and the exemplary embodiments may be applied to various communication networks (e.g. 4G communication networks, 5G communication networks, and/or 6G communication networks). Here, 'communication network' may be used interchangeably with a term 'communication system'.

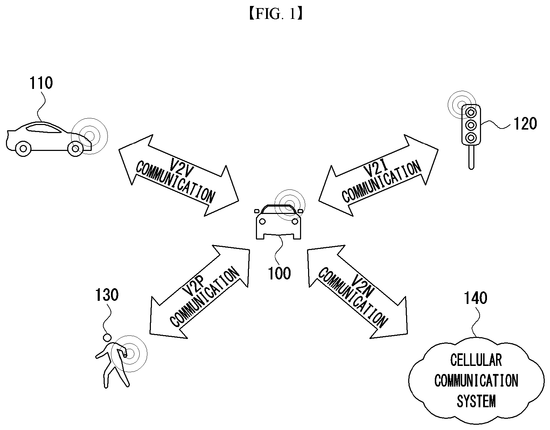

FIG. 1 is a conceptual diagram illustrating scenarios of Vehicle-to-Everything (V2X) communications.

As shown in FIG. 1, V2X communications may include Vehicle-to-Vehicle (V2V) communications, Vehicle-to-Infrastructure (V2I) communications, Vehicle-to-Pedestrian (V2P) communications, Vehicle-to-Network (V2N) communications, and the like. The V2X communications may be supported by a communication system (e.g. communication network) 140, and the V2X communications supported by the communication system 140 may be referred to as 'Cellular-V2X (C-V2X) communications'. Here, the communication system 140 may include the 4G communication system (e.g. LTE communication system or LTE-A communication system), 5G communication system (e.g. NR communication system), and the like.

The V2V communications may include communications between a first vehicle 100 (e.g. a communication node located in the vehicle 100) and a second vehicle 110 (e.g. a communication node located in the vehicle 110). Various driving information such as velocity, heading, time, position, and the like may be exchanged between the vehicles 100 and 110 through the V2V communications. For example, autonomous driving (e.g. platooning) may be supported based on the driving information exchanged through the V2V communications. The V2V communications supported by the communication system 140 may be performed based on sidelink communication technologies (e.g. Proximity Based Services (ProSe) and Device-to-Device (D2D) communication technologies, and the like). In this case, the communications between the vehicles 100 and 110 may be performed using at least one sidelink channel.

The V2I communications may include communications between the first vehicle 100 and an infrastructure (e.g. road side unit (RSU)) 120 located on a roadside. The infrastructure 120 may include a traffic light or a street light which is located on the roadside. For example, when the V2I communications are performed, the communications may be performed between the communication node located in the first vehicle 100 and a communication node located in a traffic light. Traffic information, driving information, and the like may be exchanged between the first vehicle 100 and the infrastructure 120 through the V2I communications. The V2I communications supported by the communication system 140 may be performed based on sidelink communication technologies (e.g. ProSe and D2D communication technologies, and the like). In this case, the communications between the vehicle 100 and the infrastructure 120 may be performed using at least one sidelink channel.

The V2P communications may include communications between the first vehicle 100 (e.g. the communication node located in the vehicle 100) and a person 130 (e.g. a communication node carried by the person 130). The driving information of the first vehicle 100 and movement information of the person 130 such as velocity, heading, time, position, and the like may be exchanged between the vehicle 100 and the person 130 through the V2P communications. The communication node located in the vehicle 100 or the communication node carried by the person 130 may generate an alarm indicating a danger by judging a dangerous situation based on the obtained driving information and movement information. The V2P communications supported by the communication system 140 may be performed based on sidelink communication technologies (e.g. ProSe and D2D communication technologies, and the like). In this case, the communications between the communication node located in the vehicle 100 and the communication node carried by the person 130 may be performed using at least one sidelink channel.

The V2N communications may be communications between the first vehicle 100 (e.g. the communication node located in the vehicle 100) and the communication system (e.g. communication network) 140. The V2N communications may be performed based on the 4G communication technology (e.g. LTE or LTE-A specified as the 3GPP standards) or the 5G communication technology (e.g. NR specified as the 3GPP standards). Also, the V2N communications may be performed based on a Wireless Access in Vehicular Environments (WAVE) communication technology or a Wireless Local Area Network (WLAN) communication technology which is defined in Institute of Electrical and Electronics Engineers (IEEE) 802.11, a Wireless Personal Area Network (WPAN) communication technology defined in IEEE 802.15, or the like.

Meanwhile, the communication system 140 supporting the V2X communications may be configured as follows.

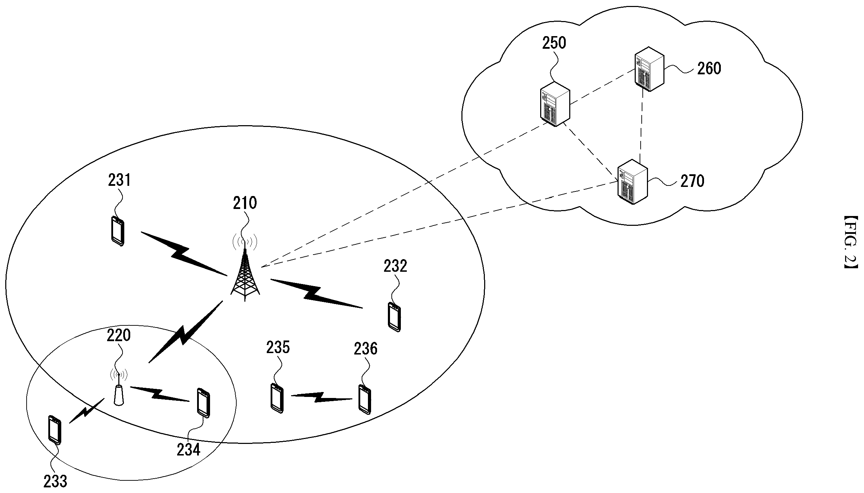

FIG. 2 is a conceptual diagram illustrating a first exemplary embodiment of a communication system.

As shown in FIG. 2, a communication system may include an access network, a core network, and the like. The access network may include a base station 210, a relay 220, user equipment (UEs) 231 through 236, and the like. The UEs 231 through 236 may include communication nodes located in the vehicles 100 and 110 of FIG. 1, the communication node located in the infrastructure 120 of FIG. 1, the communication node carried by the person 130 of FIG. 1, and the like. When the communication system supports the 4G communication technology, the core network may include a serving gateway (S-GW) 250, a packet data network (PDN) gateway (P-GW) 260, a mobility management entity (MME) 270, and the like.

When the communication system supports the 5G communication technology, the core network may include a user plane function (UPF) 250, a session management function (SMF) 260, an access and mobility management function (AMF) 270, and the like. Alternatively, when the communication system operates in a Non-Stand Alone (NSA) mode, the core network constituted by the S-GW 250, the P-GW 260, and the MME 270 may support the 5G communication technology as well as the 4G communication technology, and the core network constituted by the UPF 250, the SMF 260, and the AMF 270 may support the 4G communication technology as well as the 5G communication technology.

In addition, when the communication system supports a network slicing technique, the core network may be divided into a plurality of logical network slices. For example, a network slice supporting V2X communications (e.g. a V2V network slice, a V2I network slice, a V2P network slice, a V2N network slice, etc.) may be configured, and the V2X communications may be supported through the V2X network slices configured in the core network.

The communication nodes (e.g. base station, relay, UE, S-GW, P-GW, MME, UPF, SMF, AMF, etc.) constituting the communication system may perform communications by using at least one communication technology among a code division multiple access (CDMA) technology, a time division multiple access (TDMA) technology, a frequency division multiple access (FDMA) technology, an orthogonal frequency division multiplexing (OFDM) technology, a filtered OFDM technology, an orthogonal frequency division multiple access (OFDMA) technology, a single carrier FDMA (SC-FDMA) technology, a non-orthogonal multiple access (NOMA) technology, a generalized frequency division multiplexing (GFDM) technology, a filter bank multi-carrier (FBMC) technology, a universal filtered multi-carrier (UFMC) technology, and a space division multiple access (SDMA) technology.

The communication nodes (e.g. base station, relay, UE, S-GW, P-GW, MME, UPF, SMF, AMF, etc.) constituting the communication system may be configured as follows.

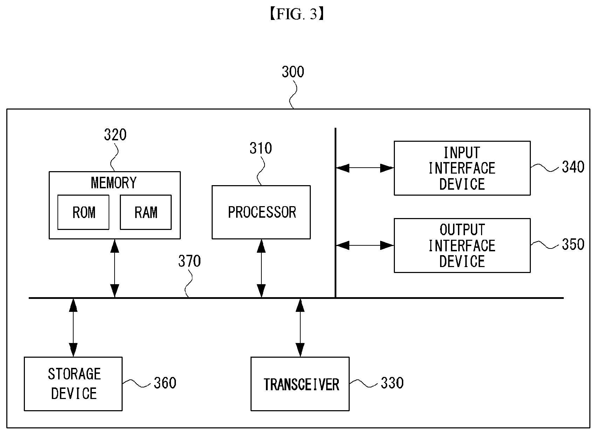

FIG. 3 is a conceptual diagram illustrating a first exemplary embodiment of a communication node constituting a communication system.

As shown in FIG. 3, a communication node 300 may comprise at least one processor 310, a memory 320, and a transceiver 330 connected to a network for performing communications. Also, the communication node 300 may further comprise an input interface device 340, an output interface device 350, a storage device 360, and the like. Each component included in the communication node 300 may communicate with each other as connected through a bus 370.

However, each of the components included in the communication node 300 may be connected to the processor 310 via a separate interface or a separate bus rather than the common bus 370. For example, the processor 310 may be connected to at least one of the memory 320, the transceiver 330, the input interface device 340, the output interface device 350, and the storage device 360 via a dedicated interface.

The processor 310 may execute at least one program command stored in at least one of the memory 320 and the storage device 360. The processor 310 may refer to a central processing unit (CPU), a graphics processing unit (GPU), or a dedicated processor on which methods in accordance with exemplary embodiments of the present disclosure are performed. Each of the memory 320 and the storage device 360 may include at least one of a volatile storage medium and a non-volatile storage medium. For example, the memory 320 may comprise at least one of read-only memory (ROM) and random access memory (RAM).

Referring again to FIG. 2, in the communication system, the base station 210 may form a macro cell or a small cell, and may be connected to the core network via an ideal backhaul or a non-ideal backhaul. The base station 210 may transmit signals received from the core network to the UEs 231 through 236 and the relay 220, and may transmit signals received from the UEs 231 through 236 and the relay 220 to the core network. The UEs 231, 232, 234, 235 and 236 may belong to a cell coverage of the base station 210. The UEs 231, 232, 234, 235 and 236 may be connected to the base station 210 by performing a connection establishment procedure with the base station 210. The UEs 231, 232, 234, 235 and 236 may communicate with the base station 210 after being connected to the base station 210.

The relay 220 may be connected to the base station 210 and may relay communications between the base station 210 and the UEs 233 and 234. That is, the relay 220 may transmit signals received from the base station 210 to the UEs 233 and 234, and may transmit signals received from the UEs 233 and 234 to the base station 210. The UE 234 may belong to both of the cell coverage of the base station 210 and the cell coverage of the relay 220, and the UE 233 may belong to the cell coverage of the relay 220. That is, the UE 233 may be located outside the cell coverage of the base station 210. The UEs 233 and 234 may be connected to the relay 220 by performing a connection establishment procedure with the relay 220. The UEs 233 and 234 may communicate with the relay 220 after being connected to the relay 220.

The base station 210 and the relay 220 may support multiple-input multiple-output (MIMO) technologies (e.g. single user (SU)-MIMO, multi-user (MU)-MIMO, massive MIMO, etc.), coordinated multipoint (CoMP) communication technologies, carrier aggregation (CA) communication technologies, unlicensed band communication technologies (e.g. Licensed Assisted Access (LAA), enhanced LAA (eLAA), etc.), sidelink communication technologies (e.g. ProSe communication technology, D2D communication technology), or the like. The UEs 231, 232, 235 and 236 may perform operations corresponding to the base station 210 and operations supported by the base station 210. The UEs 233 and 234 may perform operations corresponding to the relays 220 and operations supported by the relays 220.

Here, the base station 210 may be referred to as a Node B (NB), evolved Node B (eNB), base transceiver station (BTS), radio remote head (RRH), transmission reception point (TRP), radio unit (RU), roadside unit (RSU), radio transceiver, access point, access node, or the like. The relay 220 may be referred to as a small base station, relay node, or the like. Each of the UEs 231 through 236 may be referred to as a terminal, access terminal, mobile terminal, station, subscriber station, mobile station, portable subscriber station, node, device, on-broad unit (OBU), or the like.

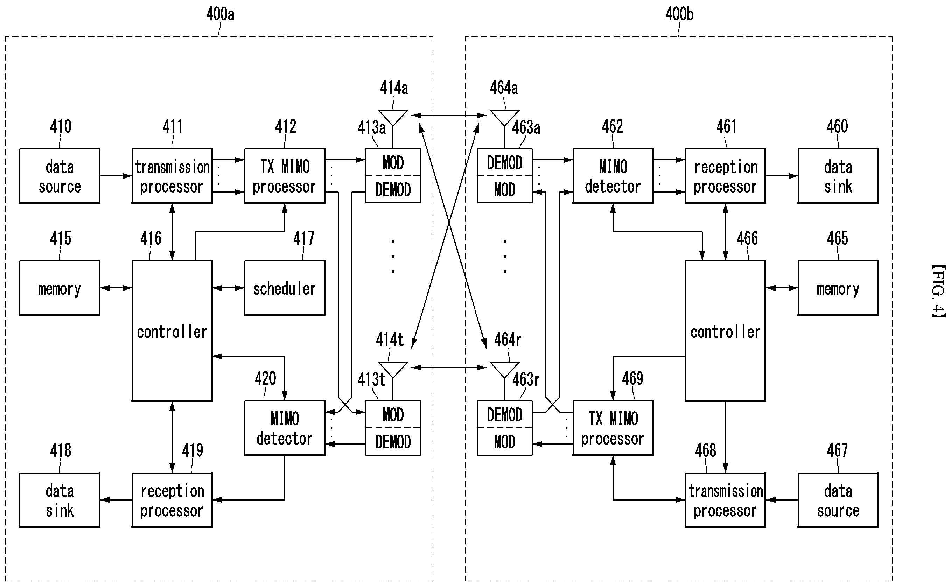

Meanwhile, communication nodes that perform communications in the communication network may be configured as follows. A communication node shown in FIG. 4 may be a specific exemplary embodiment of the communication node shown in FIG. 3.

FIG. 4 is a block diagram illustrating a first exemplary embodiment of communication nodes performing communication.

As shown in FIG. 4, each of a first communication node 400a and a second communication node 400b may be a base station or UE. The first communication node 400a may transmit a signal to the second communication node 400b. A transmission processor 411 included in the first communication node 400a may receive data (e.g. data unit) from a data source 410. The transmission processor 411 may receive control information from a controller 416. The control information may include at least one of system information, RRC configuration information (e.g. information configured by RRC signaling), MAC control information (e.g. MAC CE), or PHY control information (e.g. DCI, SCI).

The transmission processor 411 may generate data symbol(s) by performing processing operations (e.g. encoding operation, symbol mapping operation, etc.) on the data. The transmission processor 411 may generate control symbol(s) by performing processing operations (e.g. encoding operation, symbol mapping operation, etc.) on the control information. In addition, the transmission processor 411 may generate synchronization/reference symbol(s) for synchronization signals and/or reference signals.

A Tx MIMO processor 412 may perform spatial processing operations (e.g. precoding operations) on the data symbol(s), control symbol(s), and/or synchronization/reference symbol(s). An output (e.g. symbol stream) of the Tx MIMO processor 412 may be provided to modulators (MODs) included in transceivers 413a to 413t. The modulator may generate modulation symbols by performing processing operations on the symbol stream, and may generate signals by performing additional processing operations (e.g. analog conversion operations, amplification operation, filtering operation, up-conversion operation, etc.) on the modulation symbols. The signals generated by the modulators of the transceivers 413a to 413t may be transmitted through antennas 414a to 414t.

The signals transmitted by the first communication node 400a may be received at antennas 464a to 464r of the second communication node 400b. The signals received at the antennas 464a to 464r may be provided to demodulators (DEMODs) included in transceivers 463a to 463r. The demodulator (DEMOD) may obtain samples by performing processing operations (e.g. filtering operation, amplification operation, down-conversion operation, digital conversion operation, etc.) on the signals. The demodulator may perform additional processing operations on the samples to obtain symbols. A MIMO detector 462 may perform MIMO detection operations on the symbols. A reception processor 461 may perform processing operations (e.g. de-interleaving operation, decoding operation, etc.) on the symbols. An output of the reception processor 461 may be provided to a data sink 460 and a controller 466. For example, the data may be provided to the data sink 460 and the control information may be provided to the controller 466.

On the other hand, the second communication node 400b may transmit signals to the first communication node 400a. A transmission processor 469 included in the second communication node 400b may receive data (e.g. data unit) from a data source 467 and perform processing operations on the data to generate data symbol(s). The transmission processor 468 may receive control information from the controller 466 and perform processing operations on the control information to generate control symbol(s). In addition, the transmission processor 468 may generate reference symbol(s) by performing processing operations on reference signals.

A Tx MIMO processor 469 may perform spatial processing operations (e.g. precoding operations) on the data symbol(s), control symbol(s), and/or reference symbol(s). An output (e.g. symbol stream) of the Tx MIMO processor 469 may be provided to modulators (MODs) included in the transceivers 463a to 463t. The modulator may generate modulation symbols by performing processing operations on the symbol stream, and may generate signals by performing additional processing operations (e.g. analog conversion operation, amplification operation, filtering operation, up-conversion operations) on the modulation symbols. The signals generated by the modulators of the transceivers 463a to 463t may be transmitted through the antennas 464a to 464t.

The signals transmitted by the second communication node 400b may be received at the antennas 414a to 414r of the first communication node 400a. The signals received at the antennas 414a to 414r may be provided to demodulators (DEMODs) included in the transceivers 413a to 413r. The demodulator may obtain samples by performing processing operations (e.g. filtering operation, amplification operation, down-conversion operation, digital conversion operation) on the signals. The demodulator may perform additional processing operations on the samples to obtain symbols. A MIMO detector 420 may perform a MIMO detection operation on the symbols. The reception processor 419 may perform processing operations (e.g. de-interleaving operation, decoding operation, etc.) on the symbols. An output of the reception processor 419 may be provided to a data sink 418 and the controller 416. For example, the data may be provided to the data sink 418 and the control information may be provided to the controller 416.

Memories 415 and 465 may store the data, control information, and/or program codes. A scheduler 417 may perform scheduling operations for communication. The processors 411, 412, 419, 461, 468, and 469 and the controllers 416 and 466 shown in FIG. 4 may be the processor 310 shown in FIG. 3, and may be used to perform methods described in the present disclosure.

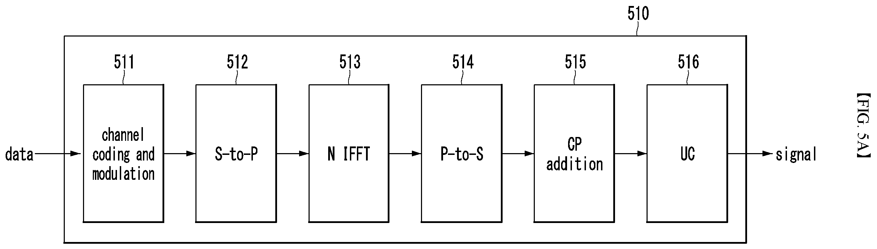

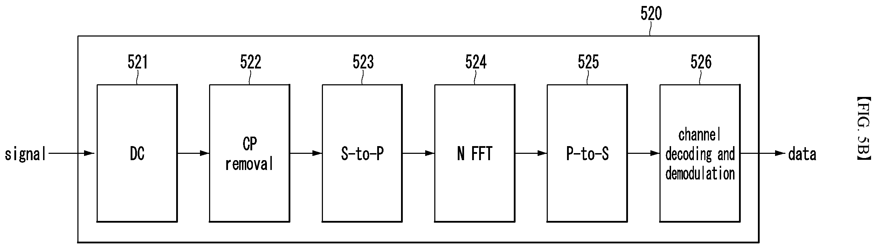

FIG. 5A is a block diagram illustrating a first exemplary embodiment of a transmission path, and FIG. 5B is a block diagram illustrating a first exemplary embodiment of a reception path.

As shown in FIGS. 5A and 5B, a transmission path 510 may be implemented in a communication node that transmits signals, and a reception path 520 may be implemented in a communication node that receives signals. The transmission path 510 may include a channel coding and modulation block 511, a serial-to-parallel (S-to-P) block 512, an N-point inverse fast Fourier transform (N-point IFFT) block 513, a parallel-to-serial (P-to-S) block 514, a cyclic prefix (CP) addition block 515, and up-converter (UC) 516. The reception path 520 may include a down-converter (DC) 521, a CP removal block 522, an S-to-P block 523, an N-point FFT block 524, a P-to-S block 525, and a channel decoding and demodulation block 526. Here, N may be a natural number.

In the transmission path 510, information bits may be input to the channel coding and modulation block 511. The channel coding and modulation block 511 may perform a coding operation (e.g. low-density parity check (LDPC) coding operation, polar coding operation, etc.) and a modulation operation (e.g. Quadrature Phase Shift Keying (OPSK), Quadrature Amplitude Modulation (QAM), etc.) on the information bits. An output of the channel coding and modulation block 511 may be a sequence of modulation symbols.

The S-to-P block 512 may convert frequency domain modulation symbols into parallel symbol streams to generate N parallel symbol streams. N may be the IFFT size or the FFT size. The N-point IFFT block 513 may generate time domain signals by performing an IFFT operation on the N parallel symbol streams. The P-to-S block 514 may convert the output (e.g., parallel signals) of the N-point IFFT block 513 to serial signals to generate the serial signals.

The CP addition block 515 may insert a CP into the signals. The UC 516 may up-convert a frequency of the output of the CP addition block 515 to a radio frequency (RF) frequency. Further, the output of the CP addition block 515 may be filtered in baseband before the up-conversion.

The signal transmitted from the transmission path 510 may be input to the reception path 520. Operations in the reception path 520 may be reverse operations for the operations in the transmission path 510. The DC 521 may down-convert a frequency of the received signals to a baseband frequency. The CP removal block 522 may remove a CP from the signals. The output of the CP removal block 522 may be serial signals. The S-to-P block 523 may convert the serial signals into parallel signals. The N-point FFT block 524 may generate N parallel signals by performing an FFT algorithm. The P-to-S block 525 may convert the parallel signals into a sequence of modulation symbols. The channel decoding and demodulation block 526 may perform a demodulation operation on the modulation symbols and may restore data by performing a decoding operation on a result of the demodulation operation.

In FIGS. 5A and 5B, discrete Fourier transform (DFT) and inverse DFT (IDFT) may be used instead of FFT and IFFT. Each of the blocks (e.g. components) in FIGS. 5A and 5B may be implemented by at least one of hardware, software, or firmware. For example, some blocks in FIGS. 5A and 5B may be implemented by software, and other blocks may be implemented by hardware or a combination of hardware and software. In FIGS. 5A and 5B, one block may be subdivided into a plurality of blocks, a plurality of blocks may be integrated into one block, some blocks may be omitted, and blocks supporting other functions may be added.

Meanwhile, communications between the UEs 235 and 236 may be performed based on sidelink communication technology (e.g. ProSe communication technology, D2D communication technology). The sidelink communication may be performed based on a one-to-one scheme or a one-to-many scheme. When V2V communication is performed using sidelink communication technology, the UE 235 may refer to a communication node located in the first vehicle 100 of FIG. 1, and the UE 236 may refer to a communication node located in the second vehicle 110 of FIG. 1. When V2I communication is performed using sidelink communication technology, the UE 235 may refer to a communication node located in the first vehicle 100 of FIG. 1, and the UE 236 may refer to a communication node located in the infrastructure 120 of FIG. 1. When V2P communication is performed using sidelink communication technology, the UE 235 may refer to a communication node located in the first vehicle 100 of FIG. 1, and the UE 236 may refer to a communication node carried by the person 130.

The scenarios to which the sidelink communications are applied may be classified as shown below in Table 1 according to the positions of the UEs (e.g. the UEs 235 and 236) participating in the sidelink communications. For example, the scenario for the sidelink communications between the UEs 235 and 236 shown in FIG. 2 may be a sidelink communication scenario C.

[Table 1]

| Sidelink Communication Scenario | Position of UE 235 | Position of UE 236 |
| --- | --- | --- |
| A | Out of coverage of base station 210 | Out of coverage of base station 210 |
| B | In coverage of base station 210 | Out of coverage of base station 210 |
| C | In coverage of base station 210 | In coverage of base station 210 |
| D | In coverage of base station 210 | In coverage of other base station |

Meanwhile, a user plane protocol stack of the UEs (e.g. the UEs 235 and 236) performing sidelink communications may be configured as follows.

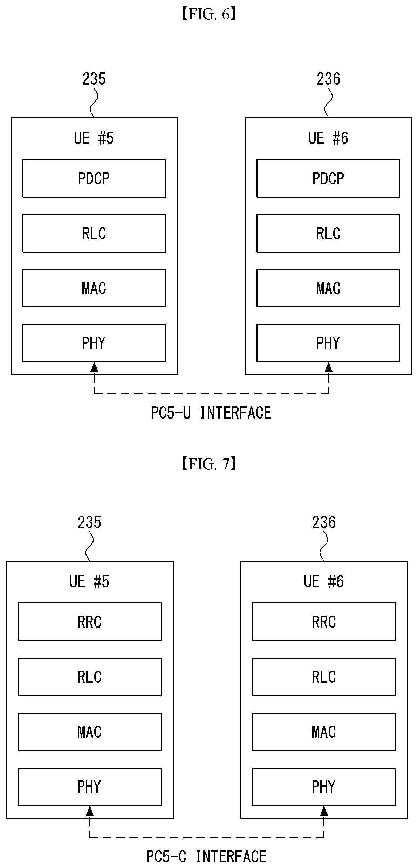

FIG. 6 is a block diagram illustrating a first exemplary embodiment of a user plane protocol stack of a UE performing sidelink communication.

As shown in FIG. 6, the UE 235 may be the UE 235 shown in FIG. 2 and the UE 236 may be the UE 236 shown in FIG. 2. The scenario for the sidelink communications between the UEs 235 and 236 may be one of the sidelink communication scenarios A to D of Table 1. The user plane protocol stack of each of the UEs 235 and 236 may comprise a physical (PHY) layer, a medium access control (MAC) layer, a radio link control (RLC) layer, and a packet data convergence protocol (PDCP) layer.

The sidelink communications between the UEs 235 and 236 may be performed using a PC5 interface (e.g. PC5-U interface). A layer-2 identifier (ID) (e.g. a source layer-2 ID, a destination layer-2 ID) may be used for the sidelink communications, and the layer 2-ID may be an ID configured for the V2X communications. Also, in the sidelink communications, a hybrid automatic repeat request (HARQ) feedback operation may be supported, and an RLC acknowledged mode (RLC AM) or an RLC unacknowledged mode (RLC UM) may be supported.

Meanwhile, a control plane protocol stack of the UEs (e.g. the UEs 235 and 236) performing sidelink communications may be configured as follows.

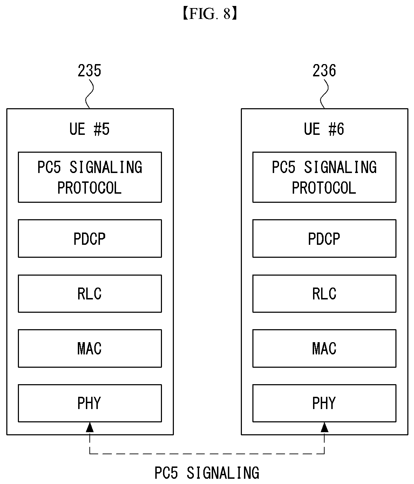

FIG. 7 is a block diagram illustrating a first exemplary embodiment of a control plane protocol stack of a UE performing sidelink communication, and FIG. 8 is a block diagram illustrating a second exemplary embodiment of a control plane protocol stack of a UE performing sidelink communication.

As shown in FIGS. 7 and 8, the UE 235 may be the UE 235 shown in FIG. 2 and the UE 236 may be the UE 236 shown in FIG. 2. The scenario for the sidelink communications between the UEs 235 and 236 may be one of the sidelink communication scenarios A to D of Table 1. The control plane protocol stack illustrated in FIG. 7 may be a control plane protocol stack for transmission and reception of broadcast information (e.g. Physical Sidelink Broadcast Channel (PSBCH)).

The control plane protocol stack shown in FIG. 7 may include a PHY layer, a MAC layer, an RLC layer, and a radio resource control (RRC) layer. The sidelink communications between the UEs 235 and 236 may be performed using a PC5 interface (e.g. PC5-C interface). The control plane protocol stack shown in FIG. 8 may be a control plane protocol stack for one-to-one sidelink communication. The control plane protocol stack shown in FIG. 8 may include a PHY layer, a MAC layer, an RLC layer, a PDCP layer, and a PC5 signaling protocol layer.

Meanwhile, channels used in the sidelink communications between the UEs 235 and 236 may include a Physical Sidelink Shared Channel (PSSCH), a Physical Sidelink Control Channel (PSCCH), a Physical Sidelink Discovery Channel (PSDCH), and a Physical Sidelink Broadcast Channel (PSBCH). The PSSCH may be used for transmitting and receiving sidelink data and may be configured in the UE (e.g. UE 235 or 236) by higher layer signaling. The PSCCH may be used for transmitting and receiving sidelink control information (SCI) and may also be configured in the UE (e.g. UE 235 or 236) by higher layer signaling.

The PSDCH may be used for a discovery procedure. For example, a discovery signal may be transmitted over the PSDCH. The PSBCH may be used for transmitting and receiving broadcast information (e.g. system information). Also, a demodulation reference signal (DM-RS), a synchronization signal, or the like may be used in the sidelink communications between the UEs 235 and 236. The synchronization signal may include a primary sidelink synchronization signal (PSSS) and a secondary sidelink synchronization signal (SSSS).

Meanwhile, a sidelink transmission mode (TM) may be classified into sidelink TMs 1 to 4 as shown below in Table 2.

[Table 2]

| Sidelink TM | Description |
| --- | --- |
| 1 | Transmission using resources scheduled by base station |
| 2 | UE autonomous transmission without scheduling of base station |
| 3 | Transmission using resources scheduled by base station in V2X communications |
| 4 | UE autonomous transmission without scheduling of base station in V2X communications |

When the sidelink TM 3 or 4 is supported, each of the UEs 235 and 236 may perform sidelink communications using a resource pool configured by the base station 210. The resource pool may be configured for each of the sidelink control information and the sidelink data.

The resource pool for the sidelink control information may be configured based on an RRC signaling procedure (e.g. a dedicated RRC signaling procedure, a broadcast RRC signaling procedure). The resource pool used for reception of the sidelink control information may be configured by a broadcast RRC signaling procedure. When the sidelink TM 3 is supported, the resource pool used for transmission of the sidelink control information may be configured by a dedicated RRC signaling procedure. In this case, the sidelink control information may be transmitted through resources scheduled by the base station 210 within the resource pool configured by the dedicated RRC signaling procedure. When the sidelink TM 4 is supported, the resource pool used for transmission of the sidelink control information may be configured by a dedicated RRC signaling procedure or a broadcast RRC signaling procedure. In this case, the sidelink control information may be transmitted through resources selected autonomously by the UE (e.g. UE 235 or 236) within the resource pool configured by the dedicated RRC signaling procedure or the broadcast RRC signaling procedure.

When the sidelink TM 3 is supported, the resource pool for transmitting and receiving sidelink data may not be configured. In this case, the sidelink data may be transmitted and received through resources scheduled by the base station 210. When the sidelink TM 4 is supported, the resource pool for transmitting and receiving sidelink data may be configured by a dedicated RRC signaling procedure or a broadcast RRC signaling procedure. In this case, the sidelink data may be transmitted and received through resources selected autonomously by the UE (e.g. UE 235 or 236) within the resource pool configured by the dedicated RRC signaling procedure or the broadcast RRC signaling procedure.

Hereinafter, sidelink communication methods will be described. Even when a method (e.g. transmission or reception of a signal) to be performed at a first communication node among communication nodes is described, a corresponding second communication node may perform a method (e.g. reception or transmission of the signal) corresponding to the method performed at the first communication node. That is, when an operation of a UE #1 (e.g. vehicle #1) is described, a UE #2 (e.g. vehicle #2) corresponding thereto may perform an operation corresponding to the operation of the UE #1. Conversely, when an operation of the UE #2 is described, the corresponding UE #1 may perform an operation corresponding to the operation of the UE #2. In exemplary embodiments described below, an operation of a vehicle may be an operation of a communication node located in the vehicle.

A sidelink signal may be a synchronization signal and a reference signal used for sidelink communication. For example, the synchronization signal may be a synchronization signal/physical broadcast channel (SS/PBCH) block, sidelink synchronization signal (SLSS), primary sidelink synchronization signal (PSSS), secondary sidelink synchronization signal (SSSS), or the like. The reference signal may be a channel state information-reference signal (CSI-RS), DM-RS, phase tracking-reference signal (PT-RS), cell-specific reference signal (CRS), sounding reference signal (SRS), discovery reference signal (DRS), or the like.

A sidelink channel may be a PSSCH, PSCCH, PSDCH, PSBCH, physical sidelink feedback channel (PSFCH), or the like. In addition, a sidelink channel may refer to a sidelink channel including a sidelink signal mapped to specific resources in the corresponding sidelink channel. The sidelink communication may support a broadcast service, a multicast service, a groupcast service, and a unicast service.

The base station may transmit system information (e.g. SIB12, SIB13, SIB14) and RRC messages including configuration information for sidelink communication (i.e. sidelink configuration information) to UE(s). The UE may receive the system information and RRC messages from the base station, identify the sidelink configuration information included in the system information and RRC messages, and perform sidelink communication based on the sidelink configuration information. The SIB12 may include sidelink communication/discovery configuration information. The SIB13 and SIB14 may include configuration information for V2X sidelink communication.

The sidelink communication may be performed within a SL bandwidth part (BWP). The base station may configure SL BWP(s) to the UE using higher layer signaling. The higher layer signaling may include *SL-BWP-Config* and/or *SL-BWP-ConfigCommon*. *SL-BWP-Config* may be used to configure a SL BWP for UE-specific sidelink communication. *SL-BWP-ConfigCommon* may be used to configure cell-specific configuration information.

Furthermore, the base station may configure resource pool(s) to the UE using higher layer signaling. The higher layer signaling may include *SL-BWP-PoolConfig, SL-BWP-PoolConfigCommon, SL-BWP-DiscPoolConfig,* and/or *SL-BWP-DiscPoolConfigCommon*. *SL-BWP-PoolConfig* may be used to configure a sidelink communication resource pool. *SL-BWP-PoolConfigCommon* may be used to configure a cell-specific sidelink communication resource pool. *SL-BWP-DiscPoolConfig* may be used to configure a resource pool dedicated to UE-specific sidelink discovery. *SL-BWP-DiscPoolConfigCommon* may be used to configure a resource pool dedicated to cell-specific sidelink discovery. The UE may perform sidelink communication within the resource pool configured by the base station.

The sidelink communication may support SL discontinuous reception (DRX) operations. The base station may transmit a higher layer message (e.g. *SL-DRX-Config*) including SL DRX-related parameter(s) to the UE. The UE may perform SL DRX operations based on *SL-DRX-Config* received from the base station. The sidelink communication may support inter-UE coordination operations. The base station may transmit a higher layer message (e.g. *SL-InterUE-CoordinationConfig*) including inter-UE coordination parameter(s) to the UE. The UE may perform inter-UE coordination operations based on *SL-InterUE-CoordinationConfig* received from the base station.

The sidelink communication may be performed based on a single-SCI scheme or a multi-SCI scheme. When the single-SCI scheme is used, data transmission (e.g. sidelink data transmission, sidelink-shared channel (SL-SCH) transmission) may be performed based on one SCI (e.g. 1st-stage SCI). When the multi-SCI scheme is used, data transmission may be performed using two SCIs (e.g. 1st-stage SCI and 2nd-stage SCI). The SCI(s) may be transmitted on a PSCCH and/or a PSSCH. When the single-SCI scheme is used, the SCI (e.g. 1st-stage SCI) may be transmitted on a PSCCH. When the multi-SCI scheme is used, the 1st-stage SCI may be transmitted on a PSCCH, and the 2nd-stage SCI may be transmitted on the PSCCH or a PSSCH. The 1st-stage SCI may be referred to as 'first-stage SCI', and the 2nd-stage SCI may be referred to as 'second-stage SCI'. A format of the first-stage SCI may include a SCI format 1-A, and a format of the second-stage SCI may include a SCI format 2-A, a SCI format 2-B, and a SCI format 2-C.

The SCI format 1-A may be used for scheduling a PSSCH and second-stage SCI. The SCI format 1-A may include at least one among priority information, frequency resource assignment information, time resource assignment information, resource reservation period information, demodulation reference signal (DMRS) pattern information, second-stage SCI format information, beta_offset indicator, number of DMRS ports, modulation and coding scheme (MCS) information, additional MCS table indicator, PSFCH overhead indicator, or conflict information receiver flag.

The SCI format 2-A may be used for decoding of a PSSCH. The SCI format 2-A may include at least one among a HARQ processor number, new data indicator (NDI), redundancy version (RV), source ID, destination ID, HARQ feedback enable/disable indicator, cast type indicator, or CSI request.

The SCI format 2-B may be used for decoding of a PSSCH. The SCI format 2-B may include at least one among a HARQ processor number, NDI, RV, source ID, destination ID, HARQ feedback enable/disable indicator, zone ID, or communication range requirement.

The SCI format 2-C may be used for decoding of a PSSCH. In addition, the SCI format 2-C may be used to provide or request inter-UE coordination information. The SCI format 2-C may include at least one among a HARQ processor number, NDI, RV, source ID, destination ID, HARQ feedback enable/disable indicator, CSI request, or providing/requesting indicator.

When a value of the providing/requesting indicator is set to 0, this may indicate that the SCI format 2-C is used to provide inter-UE coordination information. In this case, the SCI format 2-C may include at least one among resource combinations, first resource location, reference slot location, resource set type, or lowest subchannel indexes.

When a value of the providing/requesting indicator is set to 1, this may indicate that the SCI format 2-C is used to request inter-UE coordination information. In this case, the SCI format 2-C may include at least one among a priority, number of subchannels, resource reservation period, resource selection window location, resource set type, or padding bit(s).

Meanwhile, sidelink communication may be performed in a licensed band and/or an unlicensed band. The sidelink communication performed in an unlicensed band may be referred to as sidelink-unlicensed band (SL-U) communication or unlicensed band-sidelink (U-SL) communication. In SL-U communication, a first terminal may perform communication with a second terminal according to mode 1 or mode 2. When mode 1 is used, the first terminal may perform communication with the second terminal based on scheduling by a base station. When mode 2 is used, the first terminal may perform communication with the second terminal without scheduling by a base station. Mode 1 may be the sidelink TM #1 or #3 disclosed in Table 2. Mode 2 may be the sidelink TM #2 or #4 disclosed in Table 2.

Sidelink synchronization information may be delivered through a sidelink synchronization signal block (S-SSB) composed of a physical sidelink broadcast channel (PSBCH), a sidelink primary synchronization signal (S-PSS), and a sidelink secondary synchronization signal (S-SSS). The S-SSB may occupy one slot and may use the same numerology as that (pre)configured in an SL BWP. In a case of a normal cyclic prefix (CP) or an extended CP, the PSBCH, the S-PSS, and the S-SSS may be delivered through the first thirteen or eleven symbols of an S-SSB slot. The last symbol of the S-SSB slot may be used as a guard symbol.

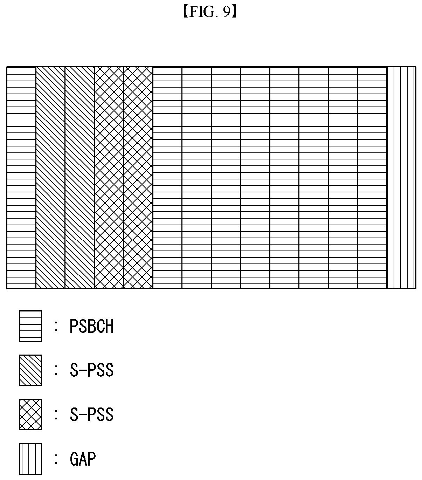

FIG. 9 is a conceptual diagram illustrating a first exemplary embodiment of a sidelink synchronization signal block in a communication system.

As shown in FIG. 9, a sidelink may be an NR sidelink, and the first exemplary embodiment of an S-SSB may correspond to a case of an S-SSB slot for a normal CP. In case of the normal CP, the S-SSB slot may be composed of two S-PSS symbols, two S-SSS symbols, and nine PSBCH symbols. On the other hand, in case of the extended CP, the S-SSB slot may be composed of two S-PSS symbols, two S-SSS symbols, and seven PSBCH symbols.

The S-SSB may not be frequency-division-multiplexed with other sidelink physical channels within an SL BWP. In other words, S-SSB(s) may not be transmitted in slots of a resource pool. A frequency location of the S-SSB may be (pre) configured within the SL BWP. Therefore, a terminal (e.g. receiving terminal) may not need to perform blind detection to detect the S-SSB in the frequency domain.

Meanwhile, in an NR sidelink system, a plurality of numerologies having different subcarrier spacings (SCSs) and/or CP lengths may be supported. As the size of the SCS increases, a length of a time resource for S-SSB transmission by a transmitting terminal becomes shorter, and thus, a coverage of the S-SSB may decrease. Therefore, in order to guarantee the coverage of the S-SSB, the number of S-SSBs transmitted by the transmitting terminal to the receiving terminal within an S-SSB transmission period according to the size of the SCS may be as shown in Table 3. Here, the number of S-SSBs transmitted by the transmitting terminal to the receiving terminal may be (pre)configured, and the S-SSB transmission period may be 160 ms.

[Table 3]

| Frequency range | Subcarrier spacing | Number of S-SSBs per period |
|---|---|---|
| FR1 | 15kHz | 1 |
| | 30kHz | 1, 2 |
| | 60kHz | 1, 2, 4 |
| FR2 | 60kHz | 1, 2, 4, 8, 16, 32 |
| | 120kHz | 1, 2, 4, 8, 16, 32, 64 |

In Table 3, an NR frequency band may be defined by two types of frequency ranges. The two types of frequency ranges may be represented as FR1 and FR2. FR1 may refer to a band of 6 GHz or lower, and FR2 may refer to a band of 6 GHz or higher. In addition, a plurality of SCSs may be supported for each of FR1 and FR2. Meanwhile, a numerical value of the frequency range may be changed. In other words, FR1 may include a band higher than 6 GHz. For example, an unlicensed band of 6 GHz or higher may be included in FR1.

In an exemplary embodiment, as shown in Table 3, when the SCS is 15 kHz in FR1, the transmitting terminal may transmit one S-SSB within an S-SSB period based on information related to a time offset.

In another exemplary embodiment, as shown in Table 3, when the SCS is 30 kHz in FR1, the transmitting terminal may transmit one S-SSB within an SSB period based on information related to a time offset. In addition, the transmitting terminal may transmit two S-SSBs within an SSB period based on information related to a time offset and a time interval.

In yet another exemplary embodiment, as shown in Table 3, when the SCS is 60 kHz in FR1, the transmitting terminal may transmit one S-SSB within an SSB period based on information related to a time offset. The transmitting terminal may transmit two S-SSBs within an SSB period based on information related to a time offset and information related to a time interval. In addition, the transmitting terminal may transmit four S-SSBs within an SSB period based on information related to a time offset and information related to a time interval.

In the above-described exemplary embodiments, the receiving terminal may decode S-SSB(s) within the S-SSB period based on the information related to the time offset and/or the information related to the time interval.

Similarly to the SSB structure in the NR Uu, S-SSB(s) may be transmitted within one S-SSB period. The number of S-SSB transmissions within one S-SSB period may be (pre)configured depending on the SCS and the frequency range, as shown in Table 3. The S-SSB(s) may be located within the S-SSB period according to two (pre)configured parameters (e.g. offset parameter and time interval parameter). Here, one S-SSB period may be 160 ms. The offset parameter may refer to the information related to the time offset described above, and the time interval parameter may refer to the information related to the time interval described above.

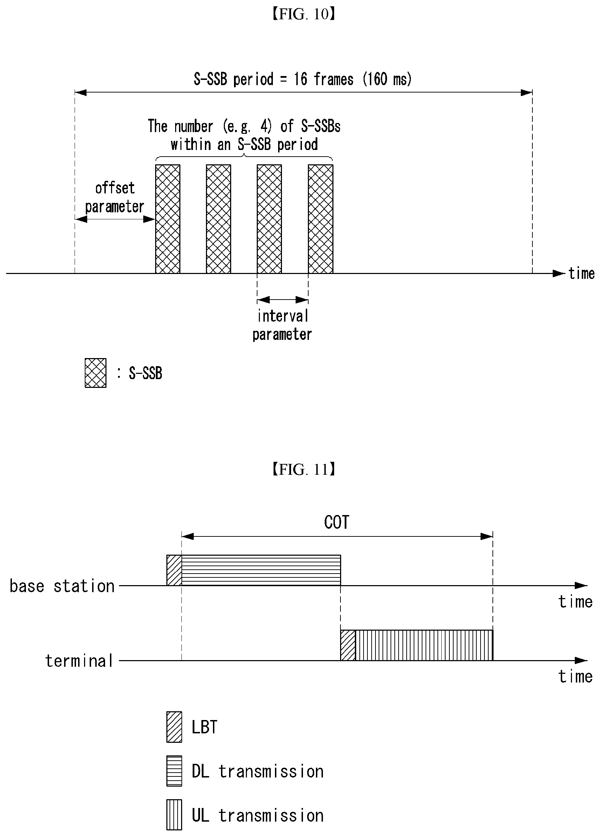

FIG. 10 is a conceptual diagram illustrating a first exemplary embodiment of a sidelink synchronization signal block transmission in a communication system.

As shown in FIG. 10, S-SSB(s) may be transmitted at a periodicity of 160 ms (16 frames), and a plurality of S-SSBs (e.g. four S-SSBs) may be included within an S-SSB period. A transmission time of each of the plurality of S-SSBs may be determined according to the offset parameter and the interval parameter. The offset parameter may represent an offset from a start time of the S-SSB period to the first S-SSB and may be expressed as a time offset. The interval parameter may represent an interval between the S-SSBs and may be expressed as a time interval.

The terminal may assume that S-SSB(s) are transmitted at a periodicity of 160 ms (16 frames). The terminal may determine a slot index $i_{slot}^{S-SSB}$ of the S-SSB(s) within one S-SSB period by using Equation 1. An index 0 as the start time of the S-SSB period may indicate the first slot of a frame satisfying (system frame number (SFN) mod 16 = 0). Alternatively, the index 0 as the start time of the S-SSB period may indicate the first slot of a frame satisfying (direct frame number (DFN) mod 16 = 0). Here, 'mod' may represent a modulo operator, and each frame within a 1024-frame period may be identified by an SFN.

[Equation 1]

$$i_{slot}^{S-SSB} = N_{offset}^{S-SSB} + (N_{interval}^{S-SSB} + 1) \cdot i_{S-SSB}$$

$$0 \le N_{offset}^{S-SSB} \le 1279$$

$$0 \le N_{interval}^{S-SSB} \le 639$$

$$0 \le i_{S-SSB} \le N_{period}^{S-SSB}$$

Here, $N_{offset}^{S-SSB}$ may denote the time offset within the S-SSB period, $N_{interval}^{S-SSB}$ may denote the time interval, $i_{S-SSB}$ may denote an S-SSB index within the SSB period, and $N_{period}^{S-SSB}$ may denote the number of S-SSBs within the S-SSB period. $N_{period}^{S-SSB}$ may be associated with the frequeny range and the SCS. For example, as shown in Table 3, when the SCS = 60 kHz in FR1, one S-SSB, two S-SSBs, or four S-SSBs may be included within the S-SSB period. Also, $N_{period}^{S-SSB}$, $N_{offset}^{S-SSB}$, and $N_{interval}^{S-SSB}$ may be configured by a higher layer (e.g. RRC layer) using Table 4.

[Table 4]

```
SL-SSB-TimeAllocation-r16 ::= SEQUENCE {

        sl-NumSSB-WithinPeriod-r16        ENUMERATED {n1, n2, n4, n8, n16, n32, n64}

                                          OPTIONAL, -- Need R

        sl-TimeOffsetSSB-r16              INTEGER (0..1279)

                                          OPTIONAL, -- Need R

        sl-TimeInterval-r16              INTEGER (0..639)

                                          OPTIONAL, -- Need R

}
```

Referring to Table 4, the terminal may configure at least one of the number of S-SSB transmissions within one S-SSB period, a time offset, or a time interval by using S-SSB time allocation information (*SL-SSB-TimeAllocation-r16*).

In Table 4, a parameter *sl-NumSSB-WithinPeriod* may indicate the number of S-SSB transmissions within one S-SSB period. Applicable values may vary according to the frequency range and the subcarrier spacing as follows:

- FR1, SCS = 15 kHz: 1
- FR1, SCS = 30 kHz: 1, 2
- FR1, SCS = 60 kHz: 1, 2, 4
- FR2, SCS = 60 kHz: 1, 2, 4, 8, 16, 32
- FR2, SCS = 120 kHz: 1, 2, 4, 8, 16, 32, 64

In Table 4, a parameter *sl-TimeOffsetSSB* may indicate a slot offset from a start of an S-SSB period to the first S-SSB. In addition, a parameter *sl-TimeInterval* may indicate a slot interval between adjacent S-SSBs and may be applicable when two or more S-SSBs exist within one S-SSB period.

Meanwhile, sidelink communication may be performed in a licensed band and/or an unlicensed band. The sidelink communication performed in an unlicensed band may be referred to as SL-U communication or U-SL communication. In SL-U communication, a first terminal may perform communication with a second terminal according to mode 1 or mode 2. When mode 1 is used, the first terminal may perform communication with the second terminal based on scheduling by a base station. When mode 2 is used, the first terminal may perform communication with the second terminal without scheduling by a base station. Mode 1 may be the sidelink TM #1 or #3 disclosed in Table 2. Mode 2 may be the sidelink TM #2 or #4 disclosed in Table 2.

FIG. 11 is a timing diagram illustrating a first exemplary embodiment of a communication method in an unlicensed band.

As shown in FIG. 11, a base station may perform a listen before talk (LBT) operation to perform DL transmission, and may perform the DL transmission when a result of the LBT operation indicates an idle state (e.g. clean state) of a channel. The terminal may perform an LBT operation to perform UL transmission, and may perform the UL transmission when a result of the LBT operation indicates an idle state of the channel. When the result of the LBT operation indicates a busy state of the channel, the DL transmission and/or the UL transmission may not be performed. The DL transmission and/or the UL transmission may be performed within a channel occupancy time (COT). The COT may be initiated by the base station or the terminal. The LBT operation may be performed based on a category disclosed in Table 5.

[Table 5]

| | Description |
|---|---|
| Category 1 (Cat 1 LBT) | The transmission operation is performed after a short switching gap of 16 $\mu s$. The CCA operation is not performed. |
| Category 2 (Cat 2 LBT) | The LBT operation is performed within a fixed CCA period (e.g. *25 $\mu s$*) without a random backoff operation. |
| Category 3 (Cat 3 LBT) | The LBT operation is performed based on a random backoff operation and a variable CCA period. The size of contention window is fixed. |

(continued)

| | Description |
|---|---|
| Category 4 (Cat 4 LBT) | The LBT operation is performed based on a random backoff operation and a variable CCA period. The size of contention window is variable. |

The LBT operation may refer to a clear channel assessment (CCA) operation. The CCA operation may be performed during a CCA period. When the CCA operation is performed, a communication node (e.g. base station and/or terminal) may identify a channel state based on an energy detection (ED) scheme. In other words, the communication node may identify whether another signal exists in the channel. When an energy detected during the CCA period is lower than a threshold (e.g. ED threshold), the communication node may determine that the channel state is in the idle state. In other words, the communication node may determine that another signal does not exist in the channel. When the channel state is in the idle state, the communication node may access the channel within a COT. When the energy detected during the CCA period is equal to or greater than the threshold, the communication node may determine that the channel state is in the busy state. In other words, the communication node may determine that another signal exists in the channel. When the channel state is in the busy state, the communication node may not access the channel within a COT.

In an unlicensed band, a communication node may perform an LBT operation and may transmit data when a result of the LBT operation indicates an idle state of a channel. In this case, the base station may transmit a DL transmission burst within a COT, and the terminal may transmit a UL transmission burst within the COT. The COT may be configured within a maximum COT (MCOT). A slot duration for the CCA may be 5 $\mu$s to 9 $\mu$s. A duration of the MCOT may be 8 ms. The base station may initiate and/or configure a COT based on a higher layer parameter *SemiStaticChannelAccessConfig.* *SemiStaticChannelAccessConfig* may include information on a period of the COT. The terminal may identify the COT initiated by the base station based on *SemiStaticChannelAccessConfig.*

The terminal may initiate and/or configure a COT based on a higher layer parameter *SemiStaticChannelAccessConfigUE. SemiStaticChannelAccessConfigUE* may include period information and offset information of the COT. The base station may identify the COT initiated by the terminal based on *SemiStaticChannelAccessConfigUE.*

The terminal may initiate and/or configure a COT based on *SemiStaticChannelAccessConfigUE* in an unlicensed band. As another method, the base station may signal *SemiStaticChannelAccessConfigSL-U* for a COT of SL-U communication to the terminal. The COT for the SL-U communication may be referred to as an SL-COT. *SemiStaticChannelAccessConfigSL-U* may include period information and offset information of the SL-COT. The terminal may configure an SL-COT based on *SemiStaticChannelAccessConfigSL-U.* Another terminal may identify the COT initiated based on *SemiStaticChannelAccessConfigSL-U.*

In an unlicensed band, the terminal may perform an LBT operation before SL communication (e.g. transmission of SL data) in order to perform the SL communication. When the LBT operation is successful, a COT may be initiated in the unlicensed band, and the SL communication may be performed within the COT. 'The LBT operation being successful' may refer to a result of the LBT operation indicating an idle state.

In an unlicensed band, channel access procedures may be classified into a DL channel access procedure and a UL channel access procedure. The DL channel access procedure may be classified into a type 1 DL channel access procedure and a type 2 DL channel access procedure. The type 1 DL channel access procedure may be performed to initiate a COT. The type 2 DL channel access procedure may be performed for transmission within a COT (e.g. shared COT). The channel access procedure may correspond to an LBT operation. The type 1 DL channel access procedure may be performed for at least one of physical downlink shared channel (PDSCH) transmission, physical downlink control channel (PDCCH) transmission, or enhanced PDCCH (EPDCCH) transmission initiated by an eNB and/or any transmission initiated by a gNB. The eNB may mean a base station in a 4G communication system, and the gNB may mean a base station in a 5G communication system.

The type 2 DL channel access procedure may be performed for at least one of: discovery burst transmission or transmission not including a PDSCH, both initiated by an eNB; and/or discovery burst transmission or discovery transmission multiplexed with non-unicast information, both initiated by a gNB. The type 2 DL channel access procedure may be classified into a type 2A DL channel access procedure, a type 2B DL channel access procedure, and a type 2C DL channel access procedure. In the type 2A DL channel access procedure, the type 2B DL channel access procedure, and the type 2C DL channel access procedure, a length of a sensing period (e.g. sensing interval) may differ. In the type 2A DL channel access procedure, the length of the sensing period may be 25 $\mu$s. In the type 2B DL channel access procedure, the length of the sensing period may be 16 $\mu$s. In the type 2C DL channel access procedure, the sensing operation may not be performed.

The UL channel access procedure may be classified into a type 1 UL channel access procedure and a type 2 UL channel access procedure. The type 1 UL channel access procedure may be performed to initiate a COT. The type 2 UL channel access procedure may be performed for transmission within a COT (e.g. shared COT). The type 1 UL channel access procedure may be performed for at least one of physical uplink shared channel (PUCCH) transmission or sounding reference signal (SRS) transmission scheduled or configured by an eNB, at least one of PUSCH transmission or SRS transmission scheduled or configured by a gNB, PUCCH transmission scheduled or configured by a gNB, and/or transmission related to a random access (RA) procedure.

The type 2 UL channel access procedure may be classified into a type 2A UL channel access procedure, a type 2B UL channel access procedure, and a type 2C UL channel access procedure. In the type 2A UL channel access procedure, the type 2B UL channel access procedure, and the type 2C UL channel access procedure, a length of a sensing period (e.g. sensing interval) may differ. In the type 2A UL channel access procedure, the length of the sensing period may be 25 μs. In the type 2B UL channel access procedure, the length of the sensing period may be 16 μs. In the type 2C UL channel access procedure, the sensing operation may not be performed.

The type 1 DL channel access procedure, the type 2 DL channel access procedure, the type 1 UL channel access procedure, and/or the type 2 UL channel access procedure may be used for SL-U communication. In this case, in the descriptions on the type 1 DL channel access procedure, the type 2 DL channel access procedure, the type 1 UL channel access procedure, and/or the type 2 UL channel access procedure, a downlink channel and/or an uplink channel may be interpreted as a sidelink channel. The LBT operation may be interpreted as the type 1 DL channel access procedure, the type 2 DL channel access procedure, a new type DL channel access procedure, the type 1 UL channel access procedure, the type 2 UL channel access procedure, and/or a new type UL channel access procedure.

Similarly to NR in an unlicensed band (NR-U), in SL-U communication, an LBT operation may need to be performed for a certain time before transmission of a sidelink channel or sidelink signal such as PSCCH, PSSCH, PSFCH, or S-SSB in an unlicensed band. For example, in case of 15 kHz SCS, one S-SSB may be transmitted in one S-SSB period. When an LBT operation fails before transmission of the S-SSB, the S-SSB may not be transmitted during the S-SSB period. In other words, due to the failure of the LBT operation, the S-SSB transmission also may not be performed, and the S-SSB transmission may be delayed. Therefore, in order to prevent the S-SSB transmission from being delayed, the S-SSB may need to be transmitted more frequently in SL-U than in the existing NR SL. In addition, transmission position(s) of increased S-SSB(s) in SL-U communication may need to be defined. In this case, information on the transmission position(s) may be indicated through higher layer signaling (e.g. RRC signaling).

Meanwhile, in SL-U communication, S-SSB transmission may be performed by using S-SSB occasion(s) and additional candidate S-SSB occasion(s) within one S-SSB period. The terminal may identify the S-SSB transmission occasion(s) by using Equation 1. When the number $N_{additional}^{S-SSB}$ of additional candidate S-SSB occasion(s) is greater than 0 (i.e. $N_{additional}^{S-SSB} > 0$), the terminal may determine indexes of slots including the additional candidate S-SSB occasion(s) as $N_{offset}^{S-SSB} + \left(N_{interval}^{S-SSB} + 1\right) \cdot i_{S-SSB} + N_{gap}^{S-SSB} \cdot \left(\bar{i}_{S-SSB} + 1\right)$, and may identify the additional candidate S-SSB occasion(s). $N_{additional}^{S-SSB}$ may represent the number of the additional candidate S-SSB occasion(s). The terminal may determine the number $N_{additional}^{S-SSB}$ of additional candidate S-SSB occasion(s) by using a higher layer parameter *sl-NumAdditionalOccasionPerSSB*. $N_{gap}^{S-SSB}$ may be a slot gap for determining the additional candidate S-SSB transmission(s). The terminal may determine $N_{gap}^{S-SSB}$ by using a higher layer parameter *sl-TimeGapAdditionalOccasion*. For example, the higher layer may be an RRC layer. For example, the higher layer may be an RRC layer, and the parameter sl-*NumAdditionalOccasionPerSSB* and the parameter *sl-TimeGapAdditionalOccasion* may be (pre)configured to the terminal. Alternatively, the terminal may be configured by receiving an RRC message including the parameter *sl-NumAdditionalOccasionPerSSB* and the parameter *sl-TimeGapAdditionalOccasion* from the base station.

In the above-described SL-U communication, S-SSB transmission may use additional candidate S-SSB occasion(s) in order to prevent the S-SSB transmission from being delayed. However, in order to prevent S-SSB transmission from being delayed, S-SSB(s) may need to be transmitted more frequently in SL-U. The present disclosure proposes a method in which S-SSB transmission is performed more frequently in SL-U than in the above-described SL-U communication. The following description is based on operations in FR1 for convenience of description, but is not limited thereto. A similar method may be applied to FR2 as well.

First, similarly to the case of NR sidelink, the number of S-SSBs that can be transmitted per S-SSB period may be configured as shown in Table 6.

[Table 6]

| Frequency range | Subcarrier spacing | Number of S-SSBs per period |
|---|---|---|
| FR1 | 15kHz | 1, ..., N |
| | 30kHz | 1, 2, ..., 2N |
| | 60kHz | 1, 2, 4, ...., 4N |

In Table 6, in case of 15 kHz SCS, the maximum number of S-SSBs that can be transmitted per period may be set as N (N is a natural number). In case of 30 kHz SCS and 60 kHz SCS, the maximum number of S-SSBs that can be transmitted per S-SSB period may proportionally increase to 2N and 4N, respectively. In addition, according to a value of N, an offset parameter and an interval parameter each may need to be set not to exceed an S-SSB period. When an LBT operation is successful within an S-SSB period, the offset parameter and the interval parameter each may be set to a small value in order to transmit the S-SSB with low delay.

In an exemplary embodiment, the offset parameter and the interval parameter each may be set to at least one value. When the offset parameter is 0 and the interval parameter is 10, the S-SSB may be transmitted with an interval of 10 slots from the first slot within the S-SSB period.

In an exemplary embodiment, for SL-U with the same SCS, the same number of S-SSBs may always be transmitted per S-SSB period as shown in Table 7.

[Table 7]

| Frequency range | Subcarrier spacing | Number of S-SSBs per period |
|---|---|---|
| FR1 | 15kHz | N |
| | 30kHz | 2N |
| | 60kHz | 4N |

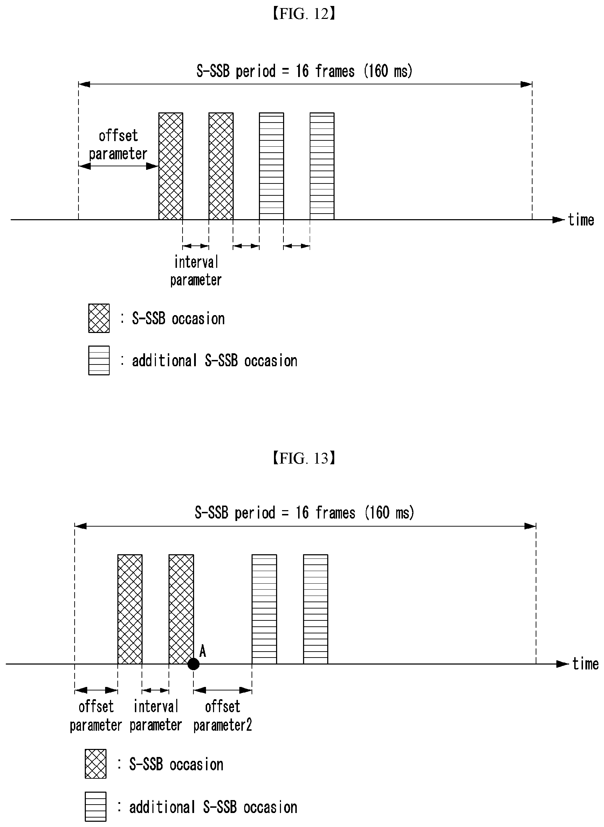

FIG. 12 is a conceptual diagram illustrating a first exemplary embodiment of synchronization signal block transmission in sidelink communication in an unlicensed band.

As shown in FIG. 12, in SL-U, an S-SSB period may be 16 frames (160 ms), and two S-SSB occasions and two additional S-SSB occasions may exist within one S-SSB period. An offset parameter may represent a start time for an S-SSB occasion for the first S-SSB transmission within one S-SSB period. An interval parameter may represent a time interval between adjacent S-SSB occasions within one S-SSB period. S-SSB transmission may use four consecutive S-SSB occasions with the same time interval within one S-SSB period. A frequency range may be assumed to be FR1 and an SCS may be assumed to be 15 kHz. This is for convenience of description and the present disclosure is not limited thereto.

In the case where the frequency range is FR1 and the SCS is 15 kHz, in the existing NR sidelink, one S-SSB may be transmitted within one S-SSB period as shown in Table 3. As described above, in SL-U, when an LBT operation fails before S-SSB transmission, the S-SSB transmission may be delayed. Therefore, in SL-U, in order to perform S-SSB transmissions more frequently than S-SSB transmissions in the existing NR SL, the number of S-SSB transmissions within one S-SSB period may be set to N as shown in Table 7. In addition, the number of S-SSB transmissions may be increased by N. Here, N may be 2. In other words, in SL-U, when the frequency range is FR1 and the SCS is 15 kHz, the number of S-SSB transmissions in the existing NR SL may be 2, and the number of additional S-SSB transmissions may also be 2.

As shown in FIG. 12, in SL-U, the number of existing S-SSB transmissions per S-SSB period may be set to N (e.g. N=2), and N S-SSB transmissions may be additionally performed. Transmission time(s) of the additionally transmitted S-SSB(s) may be configured with the same time interval within one S-SSB period. Within one S-SSB period, the S-SSB transmissions may be performed by using the existing S-SSB occasions and the additional S-SSB occasions. Here, an S-SSB occasion may mean a transmission time of an S-SSB. The S-SSB occasion may correspond to an S-SSB transmission time in the existing NR SL, and the additional S-SSB occasion may correspond to an S-SSB transmission time added to minimize a delay of S-SSB transmission.

FIG. 13 is a conceptual diagram illustrating a second exemplary embodiment of synchronization signal block transmission in sidelink communication in an unlicensed band.

As shown in FIG. 13, an S-SSB period may be 16 frames (160 ms), and two S-SSB occasions and two additional S-SSB occasions may exist within one S-SSB period. An offset parameter may represent a start time for an S-SSB occasion for the first S-SSB transmission within the S-SSB period. An interval parameter may represent a time interval between adjacent S-SSB occasions. An offset parameter 2 may be a new offset parameter and may represent a start time of an additional occasion from the last time (i.e. time A) of the existing S-SSB. A time interval (e.g. interval parameter 2) between adjacent additional S-SSB occasions may be additionally defined and configured. When the time interval (e.g. interval parameter 2) between adjacent additional S-SSB occasions does not exist, the time interval (e.g. the interval parameter) between adjacent S-SSB occasions may be applied as the time interval between adjacent additional S-SSB occasions. The frequency range may be assumed to be FR1 and the SCS may be assumed to be 15 kHz. This is for convenience of description and the present disclosure is not limited thereto.

As described with reference to FIG. 12, in SL-U, in order to perform S-SSB transmissions more frequently than S-SSB transmissions in the existing NR SL, the number of S-SSB transmissions within one S-SSB period may be set to N as shown in Table 7. In addition, the number of S-SSB transmissions may be increased by N. Here, N may be 2. In other words, in SL-U, when the frequency range is FR1 and the SCS is 15 kHz, the number of existing S-SSB transmissions of the NR SL may be 2, and the number of additional S-SSB transmissions may also be 2.

In the second exemplary embodiment of S-SSB transmission in SL-U communication, additionally transmitted S-SSBs may be transmitted sequentially with the existing S-SSBs within one S-SSB period. A transmission time of each S-SSB may be configured by using the same offset parameter, a different offset parameter, the same time interval, and/or a different time interval.

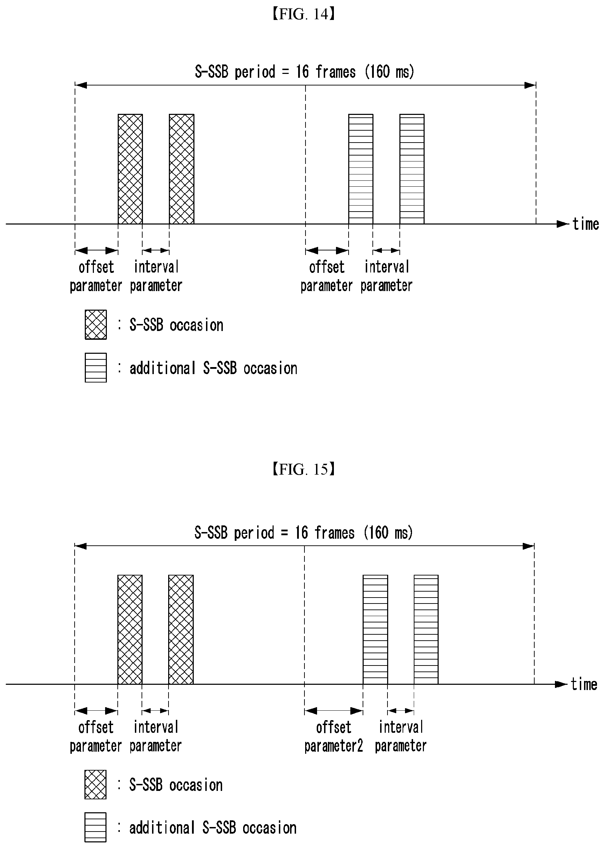

FIG. 14 is a conceptual diagram illustrating a third exemplary embodiment of synchronization signal block transmission in sidelink communication in an unlicensed band.

As shown in FIG. 14, one S-SSB period may be divided into units each with a length of 160/N ms. Here, one S-SSB period may be 160 ms, and N may be 2. One S-SSB period may be divided into a first subperiod and a second subperiod in units of 80 ms. Two S-SSB transmission times may be configured in the first subperiod, and two additional S-SSB transmission times may be configured in the second subperiod. A transmission time of each of the S-SSBs transmitted in the first subperiod and the second subperiod may be configured by using the same offset parameter and the same time interval. The frequency range may be assumed to be FR1, and the SCS may be assumed to be 15 kHz. This assumption is for convenience of description and the present disclosure is not limited thereto.

As described with reference to FIG. 12, in SL-U, in order to perform S-SSB transmissions more frequently than S-SSB transmissions of the existing NR SL, the number of S-SSB transmissions within one S-SSB period may be set to N as shown in Table 7. In addition, the number of S-SSB transmissions may be increased by N. Here, N may be 2. In other words, in SL-U where the frequency range is FR1 and the SCS is 15 kHz, the number of S-SSB transmissions of the existing NR SL may be 2, and the number of additional S-SSB transmissions may also be 2.

In the third exemplary embodiment of S-SSB transmission in SL-U communication, one S-SSB period may be divided into units each with a length of 160/N ms. Here, one S-SSB period may be 160 ms. For example, when N is 2, one S-SSB period may be divided into a first subperiod and a second subperiod in units of 80 ms. Two S-SSB transmission times may be configured in the first subperiod, and two additional S-SSB transmission times may be configured in the second subperiod. As described above, a transmission time of each of the S-SSBs transmitted in the first subperiod and the second subperiod may be configured by using the same offset parameter and the same time interval.

FIG. 15 is a conceptual diagram illustrating a fourth exemplary embodiment of synchronization signal block transmission in sidelink communication in an unlicensed band.

As shown in FIG. 15, one S-SSB period may be divided into units each with a length of 160/N ms. Here, one S-SSB period may be 160 ms, and N may be 2. In other words, one S-SSB period may be divided into a first subperiod and a second subperiod in units of 80 ms. Two S-SSB transmission times may be configured in the first subperiod, and two additional S-SSB transmission times may be configured in the second subperiod. A transmission time of each of the S-SSBs transmitted in the first subperiod and the second subperiod may be configured by using the same offset parameter, a different offset parameter, the same time interval, and/or a different time interval. The frequency range may be assumed to be FR1, and the SCS may be assumed to be 15 kHz. This assumption is for convenience of description and the present disclosure is not limited thereto.

As described with reference to FIG. 12, in SL-U, in order to perform S-SSB transmissions more frequently than S-SSB transmissions of the existing NR SL, the number of S-SSB transmissions within one S-SSB period may be set to N as shown in Table 7. In addition, the number of S-SSB transmissions may be increased by N. Here, N may be 2. In SL-U where the frequency range is FR1 and the SCS is 15 kHz, the number of S-SSB transmissions of the existing NR SL may be 2, and the number of additional S-SSB transmissions may also be 2.

In the fourth exemplary embodiment of S-SSB transmission in SL-U communication, one S-SSB period may be divided into units each with a length of 160/N ms. Here, one S-SSB period may be 160 ms. For example, when N is 2, one S-SSB period may be divided into a first subperiod and a second subperiod in units of 80 ms. Two S-SSB transmission time may be configured in the first subperiod, and two additional S-SSB transmission times may be configured in the second subperiod. The transmission time of each of the S-SSBs may be configured by using the same offset parameter, a different offset parameter, the same time interval, and/or a different time interval.

In the above-described exemplary embodiments, the frequency range may be assumed to be FR1, and the SCS may be assumed to be 15 kHz. In SL-U, in order to perform S-SSB transmissions more frequently than S-SSB transmissions of the existing NR SL, the number of S-SSB transmissions within one S-SSB period may be set to N as shown in Table 7. Additionally, the number of S-SSB transmissions may be further increased by N. Here, one S-SSB period may be 160 ms, and N may be 2.

Meanwhile, as shown in Table 3, a smaller S-SSB period may be used to increase the number of SSBs transmitted during the same time while maintaining the number of S-SSBs per period as in the existing configuration. The S-SSB period may be delivered through higher layer signaling (e.g. RRC signaling).

In an exemplary embodiment, in SL-U, when an S-SSB period is not indicated by a higher layer (e.g. RRC layer), the S-SSB period may be set to the previously defined value (160 ms). On the other hand, when an S-SSB period is indicated, the transmitting terminal may transmit S-SSB(s) to the receiving terminal(s) during the indicated S-SSB period. The frequency range may be assumed to be FR1, and the SCS may be assumed to be 15 kHz. This assumption is for convenience of description and the present disclosure is not limited thereto.

In an exemplary embodiment, when an LBT operation succeeds within one S-SSB period, the transmitting terminal may configure an offset parameter and an interval parameter to small values in order to transmit S-SSB(s) with low delay. Each of the offset parameter and the interval parameter may be set to a specific value or more than one value.

In an exemplary embodiment, when the offset parameter is set to 0 and the interval parameter is set to 10, S-SSBs may be transmitted with an interval of 10 slots from the first slot within one S-SSB period. In this case, before transmitting the S-SSBs at the first slot (i.e. first S-SSB transmission time) within the one S-SSB period, the transmitting terminal may perform an LBT operation. If a result of the LBT operation indicates that the channel is in an idle state, the transmitting terminal may transmit an S-SSB to the receiving terminal(s) at the first S-SSB transmission time. On the other hand, if the result of the LBT operation indicates that the channel is in a busy state, the transmitting terminal may perform an LBT operation before transmitting an S-SSB to the receiving terminal(s) at a slot (i.e. second S-SSB transmission time) after a 10-slot interval elapses. If a result of the LBT operation indicates that the channel is in an idle state, the transmitting terminal may transmit an S-SSB to the receiving terminal(s) at the second S-SSB transmission time.

The above-described S-SSB transmission method in the exemplary embodiment may be applied to the exemplary embodiments described in FIG. 12 to FIG. 15.

Meanwhile, the S-SSB period and/or the S-SSB transmission times may be (pre)configured using a certain number of bit(s). In case that N bit(s) are used, the S-SSB period may be set to $\frac{160}{2^N} ms$, where 160 ms (or S-SSB period used in the existing SL-U) may be included when N is 0.

In an exemplary embodiment, when a certain number of bit(s) are not used for the S-SSB period and/or the S-SSB transmission times, the S-SSB period may be set to 160 ms. In this case, the transmitting terminal may transmit S-SSBs to the receiving terminal(s) within the 160 ms S-SSB period according to the number of S-SSBs per period in Table 3, Table 5, or Table 6.

In another exemplary embodiment, the S-SSB period and/or the S-SSB transmission times may be (pre) configured using one bit. When one bit is used, the S-SSB period may be configured as 80 ms (i.e. $\frac{160}{2} ms$).

In another exemplary embodiment, the S-SSB period and/or the S-SSB transmission times may be (pre) configured using one bit as shown in Table 8. The transmitting terminal may transmit S-SSBs to the receiving terminal(s) within the 80 ms (i.e. $\frac{160}{2} ms$) SSB period according to the number of S-SSBs per period in Table 3, Table 5, or Table 6. Here, one bit may be represented as an indication bit in Table 8.

[Table 8]

| Indication bit | Number of S-SSB transmissions per S-SSB transmission period |
|---|---|
| 0 | Number of S-SSBs per period as shown in Table 3 |
| 1 | Number of S-SSBs per period as shown in Table 5 or Table 6 |

In another exemplary embodiment, the S-SSB period and/or the S-SSB transmission times may be (pre) configured using two bits. When two bits are used, the S-SSB period may be configured as 160 40 ms (i.e. $\frac{160}{2^2} ms$).

In another exemplary embodiment, the S-SSB period and/or the S-SSB transmission times may be (pre) configured using two bits as shown in Table 9. The transmitting terminal may transmit S-SSBs to the receiving terminal(s) within the 40 ms (i.e. $\frac{160}{2^2} ms$) SSB period according to the number of S-SSBs per period in Table 3, Table 5, or Table 6. Here, two bits may be represented as an indication bit in Table 9.

[Table 9]

| Indication bits | Number of S-SSB transmissions per S-SSB transmission period and transmission locations |
|---|---|
| 00 | Offset parameter = fixed value (e.g., 0);<br>Number of S-SSB transmissions = Number of S-SSBs per period according to Table 3 |
| 01 | Offset parameter = fixed value (e.g., 0);<br>Number of S-SSB transmissions = Number of S-SSBs per period according to Table 5 or Table 6 |
| 10 | Offset parameter = one value selected from {0, ..., 639};<br>Number of S-SSB transmissions = Number of S-SSBs per period according to Table 3 |
| 11 | Offset parameter = one value selected from {0, ..., 639};<br>Number of S-SSB transmissions = Number of S-SSBs per period according to Table 5 or Table 6 |

As described above, parameters for S-SSB transmission in SL-U may be (pre)configured in the time domain by a higher layer (e.g. RRC layer).

In an exemplary embodiment, parameters for S-SSB transmission in SL-U may be included in modified SL configuration information (e.g. *SL-SyncConfig-xxx*) derived from the existing SL configuration information (e.g. *SL-SyncConfig-r16*), and may be represented as shown in Table 10. Here, the SL configuration information may refer to an SL configuration information element (IE).

[Table 10]

```
SL-SyncConfig-xxx ::= SEQUENCE {

        ...

    sl-SSB-TimeAllocation1-r16        SL-SSB-TimeAllocation-r16        OPTIONAL, -
- Need R

    sl-SSB-TimeAllocation2-r16        SL-SSB-TimeAllocation-r16        OPTIONAL, -
- Need R

    sl-SSB-TimeAllocation3-r16        SL-SSB-TimeAllocation-r16        OPTIONAL, -
- Need R

    sl-SSB-TimeAllocation4-r16        SL-SSB-TimeAllocation-xxx

OPTIONAL, -- Need R

        ...

}
```

In an exemplary embodiment, the modified SL configuration information may represent parameters for S-SSB transmission in *SL-U as sl-SSB-TimeAllocation4-xxx*, as shown in Table 10. *sl-SSB-TimeAllocation4-xxx* may include parameters that modify and supplement those of *SL-SSB-TimeAllocation-r16* shown in Table 4. *sl-SSB-TimeAllocation4-xxx* may include information on an S-SSB and/or information on S-SSB transmission times within the S-SSB period. Information indicating whether each of the information on an S-SSB period and the information on S-SSB transmission times within the S-SSB period is used may be included.

In another exemplary embodiment, parameters for S-SSB transmission in SL-U may be included in newly defined SL-U SSB configuration information (e.g. *SLU-SyncConfig-xxx*). The newly defined SL-U SSB configuration information (e.g. *SLU-SyncConfig-xxx*) may be represented as shown in Table 11.

[Table 11]

```
SLU-SyncConfig-xxx ::= SEQUENCE {

    ...

        slu-SSB-TimeAllocation-xxx        SL-SSB-TimeAllocation-xxx OPTIONAL, --
Need R

    ...

}
```

In another exemplary embodiment, the newly defined SL-U SSB configuration information may represent the parameters for S-SSB transmission in SL-U as *slu-SSB-TimeAllocation-xxx,* as shown in Table 11. *slu-SSB-Time-Allocation-xxx* may include parameters that modify and supplement those of *SL-SSB-TimeAllocation-r16* shown in Table 4. *sl-SSB-TimeAllocation4-xxx* may include information on an S-SSB period and/or information on S-SSB transmission times within the S-SSB period. Information indicating whether each of the information on an S-SSB period and the information on S-SSB transmission times within the S-SSB period is used may be included.

Next, a first exemplary embodiment of an SL-U S-SSB transmission procedure in a communication system (hereinafter referred to as a first exemplary embodiment of an S-SSB transmission procedure) will be described.

The first exemplary embodiment of the S-SSB transmission procedure may be described based on a first UE and a second UE and may include the following steps.

In step S1610, the first UE may identify a plurality of S-SSB transmission times within an S-SSB period based on S-SSB configuration information.

In step S1620, the first UE may perform a first LBT operation at a first LBT execution time prior to a first S-SSB transmission time among the plurality of S-SSB transmission times identified in step S1610.

In step S1630, the first UE may determine whether the first LBT operation performed in step S1620 has succeeded or failed.

In step S1640, when the first LBT operation is determined to have failed in step S1630, the first UE may perform a second LBT operation at a second LBT execution time prior to a second S-SSB transmission time among the plurality of S-SSB transmission times identified in step S1610.

In step S 1650, the first UE may determine whether the second LBT operation performed in step S1640 has succeeded or failed.

In step S1660, when the second LBT operation is determined to have succeeded, the first UE may transmit an S-SSB to the second UE at the second S-SSB transmission time. The second UE may receive the S-SSB at the second S-SSB transmission time.

On the other hand, in step S1630 of the first exemplary embodiment of the S-SSB transmission procedure, when the first LBT operation is determined to have succeeded, the first UE may further perform a step of transmitting an S-SSB to the second UE at the first S-SSB transmission time.

The second UE may identify the plurality of S-SSB transmission times within an S-SSB period based on S-SSB configuration information. The second UE may monitor S-SSB transmission according to the first LBT operation at the first S-SSB transmission time among the plurality of S-SSB transmission times within the S-SSB period. When the reception of the S-SSB transmission according to the first LBT operation fails, the second UE may perform monitoring for S-SSB transmission according to the second LBT operation at the second S-SSB transmission time among the plurality of S-SSB transmission times within the S-SSB period.

In the first exemplary embodiment of the S-SSB transmission procedure, the number of S-SSBs transmittable within the S-SSB period may always be the same, as shown in Table 7. Additionally, the number of S-SSBs transmitted within the S-SSB period may increase in proportion to at least one of the frequency range or the SCS. In Table 7, only the case where the frequency range is FR1 is illustrated for convenience of description, but the present disclosure is not limited thereto. In other words, the exemplary embodiments may also be applicable to a case where the frequency range is FR2.

In the first exemplary embodiment of the S-SSB transmission procedure, the plurality of S-SSB transmission times within an S-SSB period may be classified into a first S-SSB transmission time group and a second S-SSB transmission time group. Here, the first S-SSB transmission time group may include S-SSB transmission time(s) corresponding to existing S-SSB occasion(s) within the S-SSB period. The second S-SSB transmission time group may include S-SSB transmission time(s) corresponding to additional candidate S-SSB occasion(s). The additional candidate S-SSB occasion(s) may be referred to as additional S-SSB occasion(s).

In the first exemplary embodiment of the S-SSB transmission procedure, each of the first S-SSB transmission time group and the second S-SSB transmission time group within the S-SSB period may include the same number of S-SSB occasion(s). For example, the first S-SSB transmission time group may include N transmission time(s). N transmission time(s) may be additionally included. In other words, the S-SSB period may include N additional candidate S-SSB occasion(s). Here, N may be a natural number of 1 or greater.

In an exemplary embodiment, the first UE may perform SL communication in an unlicensed band and may be configured with a plurality of S-SSB transmission times within an S-SSB period. In the unlicensed band, the plurality of S-SSB transmission times may be divided into a first S-SSB transmission time group and a second S-SSB transmission time group. Each of the first S-SSB transmission time group and the second S-SSB transmission time group may include the same number of S-SSB transmission times. It may be assumed that the first S-SSB transmission time in the first S-SSB transmission time group is (pre)configured to be delayed by a time offset. In addition, it may be assumed that S-SSB transmission time(s) included in each of the first S-SSB transmission time group and the second S-SSB transmission time group are (pre)configured to be consecutive at the same time interval. Here, the S-SSB period may be (pre)defined, and each of the first S-SSB transmission time group and the second S-SSB transmission time group may include N transmission time(s). N may be a natural number of 1 or greater. Additionally, the time offset may indicate a time difference between a start time of the S-SSB period and the first S-SSB transmission time in the first S-SSB transmission time group.

In an exemplary embodiment, the first UE may perform SL communication in an unlicensed band and may include S-SSB occasion(s) and additional candidate S-SSB occasion(s) within an S-SSB period. Each of the S-SSB occasion(s) and the additional candidate S-SSB occasion(s) may correspond to an S-SSB transmission time. The S-SSB transmission time(s) corresponding to the existing S-SSB occasion(s) may be included in the first S-SSB transmission time group. The S-SSB transmission time(s) corresponding to the additional candidate S-SSB occasion(s) may be included in the second S-SSB transmission time group.

In an exemplary embodiment, N may be 2, the frequency range may be FR1, and the SCS may be 15 kHz, as (pre)configured. In this case, as shown in FIG. 12, the first UE may include four S-SSB transmission times within an S-SSB period, and the four S-SSB transmission times may be consecutive with the same time interval (e.g. interval parameter). Additionally, the first S-SSB transmission time in the first S-SSB transmission time group may be delayed by a time offset (e.g. offset parameter). Here, the S-SSB transmission times within the S-SSB period may be divided into the first S-SSB transmission time group and the second S-SSB transmission time group. Each of the first S-SSB transmission time group and the second S-SSB transmission time group may include two S-SSB transmission times.

In an exemplary embodiment, the frequency range may be FR1, and the SCS may be 15 kHz. The number of S-SSB transmission times included within the S-SSB period may increase in proportion to the frequency range and SCS. For example, when the frequency range is FR1 and the SCS is 15 kHz, each of the first S-SSB transmission time group and the second S-SSB transmission time group may include N S-SSB transmission time(s). When the frequency range is FR1 and the SCS is 30 kHz, each of the first S-SSB transmission time group and the second S-SSB transmission time group may include 2N S-SSB transmission times. When the frequency range is FR1 and the SCS is 60 kHz, each of the first S-SSB transmission time group and the second S-SSB transmission time group may include 4N S-SSB transmission times.

In an exemplary embodiment, among the plurality of S-SSB transmission times within the S-SSB period, the first S-SSB transmission time may be delayed by a time offset. In addition, each of the plurality of S-SSB transmission times within the S-SSB period may be consecutive with the same time interval. For example, when the time offset is 0 and the time interval is 10, the first UE may transmit S-SSBs at 10-slot intervals starting from the first slot within the S-SSB period.

In an exemplary embodiment, N may be 2, the frequency range may be FR1, and the SCS may be 15 kHz, as (pre)configured. In this case, as shown in FIG. 12, the first UE may include four S-SSB transmission times within an S-SSB period, and the four S-SSB transmission times may be consecutive with the same time interval (e.g. interval parameter). Additionally, the first S-SSB transmission time within the S-SSB period may be delayed by a time offset (e.g. offset parameter). Here, the S-SSB transmission times within the S-SSB period may be divided into a first S-SSB transmission time group and a second S-SSB transmission time group. Each of the first S-SSB transmission time group and the second S-SSB transmission time group may include two S-SSB transmission times.

In an exemplary embodiment, the first UE may identify a plurality of S-SSB transmission times within an S-SSB period based on S-SSB configuration information. The S-SSB configuration information may include at least one of time offset information or time interval information. Here, the time offset information may be referred to as a time offset parameter, an offset parameter, offset information, or offset. The time interval information may be referred to as a time interval parameter, an interval parameter, interval information, or interval.

In another exemplary embodiment, the first UE may perform SL communication in an unlicensed band and may be configured with a plurality of S-SSB transmission times within an S-SSB period. In SL-U, the plurality of S-SSB transmission times may be divided into a first S-SSB transmission time group and a second S-SSB transmission time group. Each of the first S-SSB transmission time group and the second S-SSB transmission time group may include the same number of S-SSB transmission times. The first S-SSB transmission time in the first S-SSB transmission time group may be assumed to be (pre)configured to be delayed by a first time offset. The first S-SSB transmission time in the second S-SSB transmission time group may be assumed to be (pre)configured to be delayed by a second time offset. In addition, the S-SSB transmission times included in each of the first S-SSB transmission time group and the second S-SSB transmission time group may be assumed to be (pre)configured to be consecutive with the same time interval. Here, the S-SSB period may be predefined, and each of the first S-SSB transmission time group and the second S-SSB transmission time group may include N transmission times. N may be a natural number of 1 or greater. The second time offset may represent a time difference between a time at which the last S-SSB transmission in the first S-SSB transmission time group is completed and the first S-SSB transmission time in the second S-SSB transmission time group. This is for convenience of description, and the present disclosure is not limited thereto. The second time offset may represent a time difference between the last S-SSB transmission time in the first S-SSB transmission time group and the first S-SSB transmission time in the second S-SSB transmission time group.

In another exemplary embodiment, the first UE may perform SL communication in an unlicensed band and may include S-SSB occasion(s) and additional candidate S-SSB occasion(s) within an S-SSB period. Each of the S-SSB occasion(s) and the additional candidate S-SSB occasion(s) may correspond to an S-SSB transmission time. The S-SSB transmission time(s) corresponding to the S-SSB occasion(s) may be included in the first S-SSB transmission time group. The S-SSB transmission time(s) corresponding to the additional candidate S-SSB occasion(s) may be included in the second S-SSB transmission time group.

In another exemplary embodiment, N may be 2, the frequency range may be FR1, and the SCS may be 15 kHz, as (pre)configured. In this case, as shown in FIG. 13, the first UE may include four S-SSB transmission times within the S-SSB period, and the four S-SSB transmission times may be consecutive with the same time interval (e.g. interval parameter). In addition, the first S-SSB transmission time in the first S-SSB transmission time group may be delayed by a first time offset (e.g. offset parameter), and the first S-SSB transmission time in the second S-SSB transmission time group may be delayed by a time offset (e.g. offset parameter 2). The second time offset may represent a time difference between a time at which the last S-SSB transmission in the first S-SSB transmission time group is completed (e.g. time A) and the first S-SSB transmission time in the second S-SSB transmission time group. Here, the S-SSB transmission times within the S-SSB period may be divided into the first S-SSB transmission time group and the second S-SSB transmission time group. Each of the first S-SSB transmission time group and the second S-SSB transmission time group may include two S-SSB transmission times.

In another exemplary embodiment, the frequency range may be FR1, and the SCS may be 15 kHz. The number of S-SSB transmission times included within an S-SSB period may increase in proportion to the frequency range and SCS as described in the exemplary embodiments.

In another exemplary embodiment, the first UE may identify a plurality of S-SSB transmission times within an S-SSB period based on S-SSB configuration information. The S-SSB configuration information may include at least one of first time offset information, time interval information, or second time offset information. The first time offset information may be referred to as a first time offset parameter, a first offset parameter, first offset information, or a first offset. The time interval information may be referred to as a time interval parameter, an interval parameter, interval information, or an interval. The second time offset information may be referred to as a second time offset parameter, a second offset parameter, second offset information, or a second offset.

In yet another exemplary embodiment, the first UE may perform SL communication in an unlicensed band and may be configured with a plurality of S-SSB transmission times within an S-SSB period. In SL-U, the plurality of S-SSB transmission times may be divided into a first S-SSB transmission time group and a second S-SSB transmission time group. Each of the first S-SSB transmission time group and the second S-SSB transmission time group may include the same number of S-SSB transmission times. The first S-SSB transmission time in the first S-SSB transmission time group may be assumed to be (pre)configured to be delayed by a first time offset. The first S-SSB transmission time in the second S-SSB transmission time group may be assumed to be (pre)configured to be delayed by a second time offset. In addition, the S-SSB transmission times included in each of the first S-SSB transmission time group and the second S-SSB transmission time group may be assumed to be (pre)configured to be consecutive with the same time interval. Here, the S-SSB period may be predefined, and each of the first S-SSB transmission time group and the second S-SSB transmission time group may include N transmission times. N may be a natural number of 1 or greater. The second time offset may represent a time difference between a start time of the S-SSB period and the first S-SSB transmission time in the second S-SSB transmission time group. The start time of the S-SSB period may be expressed as 0 and may correspond to the first slot of the S-SSB period.

In yet another exemplary embodiment, the first UE may perform SL communication in an unlicensed band and may include S-SSB occasion(s) and additional candidate S-SSB occasion(s) within an S-SSB period. Each of the S-SSB occasion(s) and the additional candidate S-SSB occasion(s) may correspond to an S-SSB transmission time. The S-SSB transmission time(s) corresponding to the S-SSB occasion(s) may be included in a first S-SSB transmission time group. The S-SSB transmission time(s) corresponding to the additional candidate S-SSB occasion(s) may be included in a second S-SSB transmission time group.

In yet another exemplary embodiment, when the first time offset is 0, the first S-SSB transmission time in the first S-SSB transmission time group may be the first slot within the S-SSB period. On the other hand, when the second time offset is 50, the first S-SSB transmission time in the second S-SSB transmission time group may be a slot delayed by 50 slots from the first slot within the S-SSB period. **In** this case, the S-SSB transmission times included in the first S-SSB transmission time group and the second S-SSB transmission time group may not overlap in the time domain.

**In** yet another exemplary embodiment, the frequency range may be FR1, and the SCS may be 15 kHz. The number of S-SSB transmission times included within an S-SSB period may increase in proportion to the frequency range and SCS as described in the exemplary embodiments.

**In** yet another exemplary embodiment, the first UE may identify a plurality of S-SSB transmission times within an S-SSB period based on S-SSB configuration information. The S-SSB configuration information may include at least one of first time offset information, time interval information, or second time offset information, as described in another exemplary embodiment.

As described above in the detailed exemplary embodiments of the first exemplary embodiment of the S-SSB transmission procedure, the S-SSB configuration information may include at least one of first time offset information, time interval information, or second time offset information. The S-SSB configuration information may further include S-SSB period information. When the S-SSB configuration information does not include the S-SSB period information, the S-SSB period may be determined as a predefined value (e.g. 160 ms). The S-SSB configuration information may further include the number of S-SSB transmission times within an S-SSB period. The number of S-SSB transmission times may be based on a case where the frequency range is FR1 and the SCS is 15 kHz, and the number of S-SSB transmission times may increase proportionally according to the frequency range and the SCS, as described above. The S-SSB configuration information may further include information on time(s) for performing the LBT operation for S-SSB transmission. When the S-SSB configuration information does not include the information on time(s) for performing the LBT operation for S-SSB transmission, the time(s) for performing the LBT operation for S-SSB transmission may be predefined to a time before the S-SSB transmission time.

In the first exemplary embodiment of the S-SSB transmission procedure, although steps S1610 to S 1660 are described individually, such a description is not intended to limit the execution order of the steps, and when necessary, the respective steps may be performed simultaneously, in different orders, or combined together.

Next, a second exemplary embodiment of the SL-U S-SSB transmission procedure in the communication system (hereinafter, a second exemplary embodiment of the S-SSB transmission procedure) will be described. The second exemplary embodiment of the S-SSB transmission procedure may be described based on a first UE, a second UE, and the like, and may include the following steps.

In step S1710, the first UE may identify a plurality of S-SSB transmission times within an S-SSB period based on S-SSB configuration information.

In step S 1720, the first UE may perform a first LBT operation at a first LBT execution time prior to the first S-SSB transmission time among the plurality of S-SSB transmission times identified in step S 1710.

In step S 1730, the first UE may determine whether the first LBT operation performed in step S1720 has succeeded or failed.

In step S1740, when the first LBT operation is determined to have failed in step S1730, the first UE may perform a second LBT operation at a second LBT execution time before the second S-SSB transmission time among the plurality of S-SSB transmission times identified in step S 1710.

In step S 1750, the first UE may determine whether the second LBT operation performed in step S1740 has succeeded or failed.

In step S 1760, when the second LBT operation is determined to have succeeded, the first UE may transmit an S-SSB to the second UE at the second S-SSB transmission time. The second UE may receive the S-SSB at the second S-SSB transmission time.

On the other hand, in step S 1730 of the second exemplary embodiment of the S-SSB transmission procedure, when the first LBT operation is determined to have succeeded, the first UE may further perform a step of transmitting an S-SSB to the second UE at the first S-SSB transmission time.

The second UE may identify the plurality of S-SSB transmission times within the S-SSB period based on S-SSB configuration information. The second UE may monitor S-SSB transmission based on the first LBT operation at the first S-SSB transmission time among the plurality of S-SSB transmission times within the S-SSB period. When reception of the S-SSB transmission based on the first LBT operation fails, the second UE may monitor S-SSB transmission based on the second LBT operation at the second S-SSB transmission time among the plurality of S-SSB transmission times within the S-SSB period.

In the second exemplary embodiment of the S-SSB transmission procedure, when the frequency range and the SCS are the same, the number of S-SSBs transmittable in the S-SSB period may be set to one of the values within a predefined range, as shown in Table 6. In addition, the number of S-SSBs transmitted within the S-SSB period may increase in proportion to the frequency range and the SCS. Although only the case where the frequency range is FR1 is shown in Table 6, this is for convenience of description and the present disclosure is not limited thereto. In other words, this may also be applied to a case where the frequency range is FR2.

In the second exemplary embodiment of the S-SSB transmission procedure, the S-SSB period may be divided into a plurality of S-SSB transmission subperiods. Here, the plurality of S-SSB transmission subperiods may include a first S-SSB transmission subperiod and at least one second S-SSB transmission subperiod other than the first S-SSB transmission subperiod. S-SSB transmission time(s) corresponding to existing S-SSB occasion(s) may be included in the first S-SSB transmission subperiod. S-SSB transmission time(s) corresponding to additional candidate S-SSB occasion(s) may be included in at least one second S-SSB transmission subperiod other than the first S-SSB transmission subperiod. The additional candidate S-SSB occasion(s) may be referred to as additional S-SSB occasion(s).

In the second exemplary embodiment of the S-SSB transmission procedure, each of the plurality of S-SSB transmission subperiods within the S-SSB period may include the same number of S-SSB transmission times. For example, the S-SSB period may be divided into the first S-SSB transmission subperiod and the second S-SSB transmission subperiod. The first S-SSB transmission subperiod may include N S-SSB occasions, and the second S-SSB transmission subperiod may include N additional candidate S-SSB occasions. Here, N may be a natural number equal to or greater than 1.

In an exemplary embodiment, the first UE may perform SL communication in an unlicensed band and may be configured with a plurality of S-SSB transmission times within an S-SSB period. One S-SSB transmission period may be divided into a plurality of S-SSB transmission subperiods, and each of the plurality of S-SSB transmission subperiods may include one S-SSB transmission time or the same plurality of S-SSB transmission times. The first S-SSB transmission time of each of the plurality of S-SSB transmission subperiods may be assumed to be (pre)configured to be delayed by a time offset. In addition, when each of the plurality of S-SSB transmission subperiods includes the same number of S-SSB transmission times, each of the plurality of S-SSB transmission subperiods may be assumed to be (pre)configured to be consecutive with the same time interval. Here, the S-SSB period may be (pre)defined, and each of the plurality of S-SSB transmission subperiods may include N transmission times. N may be a natural number equal to or greater than 1. In addition, the time offset may represent a time difference between a start time of each of the plurality of S-SSB transmission subperiods and the first S-SSB transmission time of each of the plurality of S-SSB transmission subperiods.

In an exemplary embodiment, the first UE may perform SL communication in an unlicensed band and may be configured with S-SSB occasion(s) and additional candidate S-SSB occasion(s) within an S-SSB period. Each of the S-SSB occasion(s) and the additional candidate S-SSB occasion(s) may correspond to an S-SSB transmission time. The S-SSB transmission time(s) corresponding to the S-SSB occasion(s) may be included in the first S-SSB transmission subperiod among the plurality of S-SSB transmission subperiods. The S-SSB transmission time(s) corresponding to the additional candidate S-SSB occasion(s) may be included in at least one second S-SSB transmission subperiod among the plurality of S-SSB transmission subperiods other than the first S-SSB transmission subperiod.

In an exemplary embodiment, N may be set to 2, the frequency range may be set to FR1, and the SCS may be set to 15 kHz, as (pre)configured. An S-SSB transmission period in the unlicensed band may be predefined as 160 ms. In this case, as shown in FIG. 13, the first UE may divide the S-SSB period into a first S-SSB transmission subperiod and a second S-SSB transmission subperiod. The length of the first S-SSB transmission subperiod and the second S-SSB transmission subperiod may be set (in advance) to 80 ms each. In addition, the first S-SSB transmission subperiod and the second S-SSB transmission subperiod may respectively include N (N=2) S-SSB transmission times.

In an exemplary embodiment, the frequency range may be FR1, and the SCS may be 15 kHz. An S-SSB period may be divided into a plurality of S-SSB transmission subperiods, and the number of S-SSB transmission times included in each of the plurality of S-SSB transmission subperiods may increase proportionally to the frequency range and the SCS. For example, when the frequency range is FR1 and the SCS is 15 kHz, each of the plurality of S-SSB transmission subperiods may include N S-SSB transmission times. When the frequency range is FR1 and the SCS is 30 kHz, each of the plurality of S-SSB transmission subperiods may include 2N S-SSB transmission times. When the frequency range is FR1 and the SCS is 60 kHz, each of the plurality of S-SSB transmission subperiods may include 4N S-SSB transmission times.

In an exemplary embodiment, within the S-SSB period, the first S-SSB transmission time of each of the plurality of S-SSB transmission subperiods may be delayed by a time offset from a start time of each of the plurality of S-SSB transmission subperiods. When each of the plurality of S-SSB transmission subperiods includes a plurality of S-SSB transmission times, two adjacent S-SSB transmission times within each of the plurality of S-SSB transmission subperiods may have a time difference corresponding to the same time interval.

In an exemplary embodiment, as shown in FIG. 13, an S-SSB period may be divided into a first S-SSB transmission subperiod and a second S-SSB transmission subperiod in units of 80 ms. The first S-SSB transmission subperiod and the second S-SSB transmission subperiod may each include two S-SSB transmission times. The first S-SSB transmission time in the first S-SSB transmission subperiod may be delayed by a time offset from a start time of the first S-SSB transmission subperiod. The first S-SSB transmission time in the second S-SSB transmission subperiod may be delayed by a time offset from a start time of the second S-SSB transmission subperiod. Two adjacent S-SSB transmission times in each of the first S-SSB transmission subperiod and the second S-SSB transmission subperiod may have a time difference corresponding to the same time interval. Here, the start time of the first S-SSB transmission subperiod may correspond to a start time of the S-SSB period, and the start time of the second S-SSB transmission subperiod may correspond to a midpoint of the S-SSB period.

In an exemplary embodiment, the first UE may identify a plurality of S-SSB transmission times within an S-SSB period based on S-SSB configuration information. The S-SSB configuration information may include at least one of the number of S-SSB transmission subperiods, time offset information, or time interval information. Here, the time offset information may be referred to as a time offset parameter, an offset parameter, offset information, or an offset. The time interval information may be referred to as a time interval parameter, an interval parameter, interval information, or an interval.

In another exemplary embodiment, the first UE may perform SL communication in an unlicensed band and may be configured with a plurality of S-SSB transmission times within an S-SSB period. The S-SSB period may be divided into a plurality of S-SSB transmission subperiods, and each of the plurality of S-SSB transmission subperiods may include one S-SSB transmission time or the same plurality of S-SSB transmission times. It may be assumed that the first S-SSB transmission time of each of the plurality of S-SSB transmission subperiods is (pre)configured to be delayed by a separate time offset. In addition, when each of the plurality of S-SSB transmission subperiods includes the same number of S-SSB transmission times, it may be assumed that each of the same plurality of S-SSB transmission times included in each of the plurality of S-SSB transmission subperiods is (pre)configured to be consecutive with the same time interval. Here, the S-SSB period may be predefined, and each of the plurality of S-SSB transmission subperiods may include N transmission times. N may be a natural number equal to or greater than 1.

In another exemplary embodiment, the first UE may perform SL communication in an unlicensed band and may be configured with S-SSB occasion(s) and additional candidate S-SSB occasion(s) within an S-SSB period. Each of the S-SSB occasion(s) and the additional candidate S-SSB occasion(s) may correspond to an S-SSB transmission time. The S-SSB transmission time(s) corresponding to the S-SSB occasion(s) may be included in a first S-SSB transmission subperiod among the plurality of S-SSB transmission subperiods. The S-SSB transmission time(s) corresponding to the additional candidate S-SSB occasion(s) may be included in at least one second S-SSB transmission subperiod among the plurality of S-SSB transmission subperiods other than the first S-SSB transmission subperiod.

In another exemplary embodiment, the frequency range may be FR1, and the SCS may be 15 kHz. The number of S-SSB transmission times included in the S-SSB period may increase proportionally to the frequency range and the SCS, as described in the exemplary embodiments above.

In another exemplary embodiment, within the S-SSB period, the first S-SSB transmission time of each of the plurality of S-SSB transmission subperiods may be delayed by a time offset from a start time of each of the plurality of S-SSB transmission subperiods. When each of the plurality of S-SSB transmission subperiods includes a plurality of S-SSB transmission times, two adjacent S-SSB transmission times within each S-SSB transmission subperiod may have a time difference corresponding to the same time interval.

In another exemplary embodiment, the S-SSB period may be divided into a first S-SSB transmission subperiod and a second S-SSB transmission subperiod in units of 80 ms, as shown in FIG. 14. Each of the first S-SSB transmission subperiod and the second S-SSB transmission subperiod may include two S-SSB transmission times. The first S-SSB transmission time in the first S-SSB transmission subperiod may be delayed by a first time offset from a start time of the first S-SSB transmission subperiod. The first S-SSB transmission time in the second S-SSB transmission subperiod may be delayed by a second time offset from a start time of the second S-SSB transmission subperiod. In each of the first S-SSB transmission subperiod and the second S-SSB transmission subperiod, two adjacent S-SSB transmission times may have a time difference corresponding to the same time interval. Here, the start time of the first S-SSB transmission subperiod may correspond to a start time of the S-SSB period, and the start time of the second S-SSB transmission subperiod may correspond to a midpoint of the S-SSB period.

In another exemplary embodiment, the first UE may identify a plurality of S-SSB transmission times within an S-SSB period based on S-SSB configuration information. The S-SSB configuration information may include at least one of the number of S-SSB transmission subperiods, time offset information for each S-SSB transmission subperiod, or time interval information.

As described in the detailed exemplary embodiments of the second exemplary embodiment of the S-SSB transmission procedure, the S-SSB configuration information may include at least one of the number of S-SSB transmission subperiods, time offset information for each S-SSB transmission subperiod, or time interval information. The S-SSB configuration information may further include S-SSB period information. When the S-SSB configuration information does not include the S-SSB period information, the S-SSB period may be set to a predefined value (e.g. 160 ms). The S-SSB configuration information may further include the number of S-SSB transmission times within the S-SSB transmission period. The number of S-SSB transmission times may be based on the case where the frequency range is FR1 and the SCS is 15 kHz, and the number of S-SSB transmission times may increase proportionally according to the frequency range and the SCS, as described above. When the S-SSB configuration information does not include information on time(s) for performing LBT operation for S-SSB transmission, the time(s) for performing LBT operation for S-SSB transmission may be predefined to include a time before each S-SSB transmission time.

In the second exemplary embodiment of the S-SSB transmission procedure, although steps S1710 to S1760 are described individually, such a description is not intended to limit the execution order of the steps, and when necessary, the respective steps may be performed simultaneously, in different orders, or combined together.

In the first exemplary embodiment and the second exemplary embodiment of the S-SSB transmission procedure, the first UE and the second UE may further perform a step of receiving the S-SSB configuration information from a base station. The base station may perform the following steps to transmit the S-SSB configuration information.

In step S1810, the base station may configure S-SSB LBT execution time information indicating time(s) for performing LBT operation for S-SSB transmission.

In step S1820, the base station may configure S-SSB transmission time information indicating S-SSB transmission time(s).

In step S1830, the base station may generate S-SSB configuration information including the S-SSB LBT execution time information and the S-SSB transmission time information.

In step S 1840, the base station may transmit the S-SSB configuration information to the UE.

In SL-U, the S-SSB configuration information may be (pre)configured in the time domain based on one of a symbol unit, a slot unit, or another time unit. In this case, a method similar to the methods described in FIGS. 12 to 15 may be applied.

Although steps S1810 to S1830 are described individually, such a description is not intended to limit the execution order of the steps, and when necessary, the respective steps may be performed simultaneously, in different orders, or combined together.

The information regarding the operation, configuration, and/or application of S-SSB transmission in SL-U described above may be configured specifically, independently, or commonly based on at least one of a resource pool, a service type, a priority, whether power-saving operation is performed, QoS parameters (e.g. reliability, delay), a cast type, or a terminal type (e.g. a vehicle (V)-UE or a pedestrian (P)-UE). The above-described S-SSB configuration information in SL-U may be configured by a network and/or a base station. As another method, the above-described S-SSB configuration information in SL-U may be implicitly determined based on preconfigured parameter(s).

In the exemplary embodiments described above, whether each method (e.g. each rule) is applied may be configured based on at least one of a condition, a combination of conditions, a parameter, or a combination of parameters. Whether each method is applied may be configured by a network and/or a base station. Whether each method is applied may be configured specifically for a resource pool or a service. As another method, whether each method is applied may be configured through PC5-RRC signaling among UEs.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

**Claims**

1. A method of a first user equipment (UE), comprising:

   identifying a plurality of sidelink synchronization signal block (S-SSB) transmission times within an S-SSB period based on S-SSB configuration information;
   performing a listen before talk (LBT) operation at a first LBT execution time prior to a first S-SSB transmission time among the plurality of S-SSB transmission times; and
   in response to the first LBT operation determined to have failed, performing a second LBT operation at a second LBT execution time prior to a second S-SSB transmission time among the plurality of S-SSB transmission times within the S-SSB period, and in response to the second LBT operation determined to have succeeded, transmitting an S-SSB to a second UE at the second S-SSB transmission time.

2. The method according to claim 1, wherein a number of a plurality of S-SSBs transmittable in the S-SSB period remains constant, and increases proportionally according to at least one of a frequency range (FR) or a subcarrier spacing (SCS).

3. The method according to claim 1, wherein the plurality of S-SSB transmission times within the S-SSB period are divided into a first S-SSB transmission time group and a second S-SSB transmission time group.

4. The method according to claim 3, wherein a number of S-SSB transmission times included in each of the first S-SSB transmission time group and the second S-SSB transmission time group is same, and each of the first S-SSB transmission time group and the second S-SSB transmission time group includes at least one S-SSB transmission time among the plurality of S-SSB transmission times within the S-SSB period.

5. The method according to claim 3, wherein the plurality of S-SSB transmission times within the S-SSB period are consecutive with an equal time interval, and a first S-SSB transmission time in the first S-SSB transmission time group starts at a time delayed by a time offset from a start time of the S-SSB period.

6. The method according to claim 3, wherein a first S-SSB transmission time in the first S-SSB transmission time group is delayed by a first time offset, and a first S-SSB transmission time in the second S-SSB transmission time group is delayed by a second time offset.

7. The method according to claim 6, wherein the first time offset represents a time difference between a start time of the S-SSB period and the first S-SSB transmission time in the first S-SSB transmission time group, and the second time offset represents a time difference between a last S-SSB transmission time in the first S-SSB transmission time group and the first S-SSB transmission time in the second S-SSB transmission time group.

8. The method according to claim 6, wherein the first time offset represents a time difference between a start time of the S-SSB period and the first S-SSB transmission time in the first S-SSB transmission time group, and the second time offset represents a time difference between the start time of the S-SSB period and the first S-SSB transmission time in the second S-SSB transmission time group.

9. A method of a base station, comprising:

   configuring sidelink synchronization signal block (S-SSB) listen before talk (LBT) execution time information indicating a time for performing an LBT operation for S-SSB transmission;
   configuring S-SSB transmission time information indicating a transmission time for the S-SSB transmission;
   generating S-SSB configuration information including the S-SSB LBT execution time information and the S-SSB transmission time information; and
   transmitting the S-SSB configuration information to a user equipment (UE).

10. The method according to claim 9, wherein a plurality of S-SSB transmission times within an S-SSB period are divided into a first S-SSB transmission time group and a second S-SSB transmission time group.

11. The method according to claim 10, wherein a number of a plurality of S-SSB transmission times within the S-SSB period increases in proportion to at least one of a frequency range (FR) or a subcarrier spacing (SCS).

**EP 4 611 463 A1**

12. A first user equipment (UE), comprising: at least one processor, wherein the at least one processor causes the first UE to perform:

identifying a plurality of sidelink synchronization signal block (S-SSB) transmission times within an S-SSB period based on S-SSB configuration information;
performing a listen before talk (LBT) operation at a first LBT execution time prior to a first S-SSB transmission time among the plurality of S-SSB transmission times; and
in response to the first LBT operation determined to have failed, performing a second LBT operation at a second LBT execution time prior to a second S-SSB transmission time among the plurality of S-SSB transmission times within the S-SSB period, and in response to the second LBT operation determined to have succeeded, transmitting an S-SSB to a second UE at the second S-SSB transmission time.

13. The first UE according to claim 12, wherein a number of a plurality of S-SSBs transmittable in the S-SSB period remains constant, and increases proportionally according to at least one of a frequency range (FR) or a subcarrier spacing (SCS).

14. The first UE according to claim 12, wherein the plurality of S-SSB transmission times within the S-SSB period are divided into a first S-SSB transmission time group and a second S-SSB transmission time group.

15. The first UE according to claim 14, wherein a number of S-SSB transmission times included in each of the first S-SSB transmission time group and the second S-SSB transmission time group is same, and each of the first S-SSB transmission time group and the second S-SSB transmission time group includes at least one S-SSB transmission time among the plurality of S-SSB transmission times within the S-SSB period.

16. The first UE according to claim 14, wherein the plurality of S-SSB transmission times within the S-SSB period are consecutive with an equal time interval, and a first S-SSB transmission time in the first S-SSB transmission time group starts at a time delayed by a time offset from a start time of the S-SSB period.

17. The first UE according to claim 14, wherein a first S-SSB transmission time in the first S-SSB transmission time group is delayed by a first time offset, and a first S-SSB transmission time in the second S-SSB transmission time group is delayed by a second time offset.

18. The first UE according to claim 17, wherein the first time offset represents a time difference between a start time of the S-SSB period and the first S-SSB transmission time in the first S-SSB transmission time group, and the second time offset represents a time difference between a last S-SSB transmission time in the first S-SSB transmission time group and the first S-SSB transmission time in the second S-SSB transmission time group.

19. The first UE according to claim 17, wherein the first time offset represents a time difference between a start time of the S-SSB period and the first S-SSB transmission time in the first S-SSB transmission time group, and the second time offset represents a time difference between the start time of the S-SSB period and the first S-SSB transmission time in the second S-SSB transmission time group.

29

【FIG. 1】

【FIG. 2】

【FIG. 3】

300

【FIG. 4】

【FIG. 5A】

[FIG. 5B]

```
signal ──→ ┌─────┐ 521  ┌─────────┐ 522  ┌───────┐ 523  ┌───────┐ 524  ┌───────┐ 525  ┌──────────────┐ 526
           │ DC  │ ──→  │   CP    │ ──→  │ S-to-P│ ──→  │ N FFT │ ──→  │ P-to-S│ ──→  │   channel    │ ──→ data
           │     │      │ removal │      │       │      │       │      │       │      │ decoding and │
           └─────┘      └─────────┘      └───────┘      └───────┘      └───────┘      │ demodulation │
                                                                                       └──────────────┘
```

520

【FIG. 6】

235

236

UE #5

PDCP

RLC

MAC

PHY

UE #6

PDCP

RLC

MAC

PHY

PC5-U INTERFACE

【FIG. 7】

235

236

UE #5

RRC

RLC

MAC

PHY

UE #6

RRC

RLC

MAC

PHY

PC5-C INTERFACE

【FIG. 8】

235                              236

| UE #5 |
|---|
| PC5 SIGNALING PROTOCOL |
| PDCP |
| RLC |
| MAC |
| PHY |

| UE #6 |
|---|
| PC5 SIGNALING PROTOCOL |
| PDCP |
| RLC |
| MAC |
| PHY |

PC5 SIGNALING

【FIG. 9】

▤ : PSBCH

▨ : S-PSS

▧ : S-PSS

▥ : GAP

【FIG. 10】

S-SSB period = 16 frames (160 ms)

The number (e.g. 4) of S-SSBs within an S-SSB period

offset parameter

time

interval parameter

⬚ : S-SSB

【FIG. 11】

COT

base station

time

terminal

time

▨ LBT

▤ DL transmission

▥ UL transmission

【FIG. 12】

S-SSB period = 16 frames (160 ms)

offset parameter

interval parameter

⊠ : S-SSB occasion

▤ : additional S-SSB occasion

time

【FIG. 13】

S-SSB period = 16 frames (160 ms)

A

offset parameter    interval parameter    offset parameter2

⊠ : S-SSB occasion

▤ : additional S-SSB occasion

time

【FIG. 14】

【FIG. 15】

## INTERNATIONAL SEARCH REPORT

| International application No. |
| --- |
| **PCT/KR2024/001773** |

| A. | CLASSIFICATION OF SUBJECT MATTER |
| --- | --- |

**H04W 72/25**(2023.01)i; **H04W 56/00**(2009.01)i; **H04W 74/08**(2009.01)i; **H04L 5/00**(2006.01)i; **H04W 92/18**(2009.01)i

According to International Patent Classification (IPC) or to both national classification and IPC

| B. | FIELDS SEARCHED |
| --- | --- |

Minimum documentation searched (classification system followed by classification symbols)

H04W 72/25(2023.01); H04W 72/02(2009.01); H04W 72/04(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: unlicensed, S-SSB(sidelink synchronization signal block), configuration, multiple, time interval, LBT, CCA, fail, offset

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y<br>A | CATT et al. Discussion on physical channel design framework for sidelink on unlicensed spectrum. R1-2211199, 3GPP TSG RAN WG1 #111. Toulouse, France. 07 November 2022.<br>See section 2.4.2; and figure 5. | 1,3,9-10,12,14<br>2,4-8,11,13,15-19 |
| Y | WO 2023-003414 A1 (SAMSUNG ELECTRONICS CO., LTD.) 26 January 2023 (2023-01-26)<br>See claim 1. | 1,3,9-10,12,14 |
| A | ZTE et al. Discussion on channel access mechanism for SL-U. R1-2212206, 3GPP TSG RAN WG1 #111. Toulouse, France. 07 November 2022.<br>See sections 3-6. | 1-19 |
| A | HUAWEI et al. Physical channel design for sidelink operation over unlicensed spectrum. R1-2210892, 3GPP TSG-RAN WG1 Meeting #111. Toulouse, France. 07 November 2022.<br>See section 2. | 1-19 |
| A | WO 2022-169046 A1 (LG ELECTRONICS INC.) 11 August 2022 (2022-08-11)<br>See paragraphs [0197]-[0308]; and figures 11-20. | 1-19 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **22 May 2024** | **22 May 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/001773**

| Patent document cited in search report | | | Publication date (day/month/year) | Patent family member(s) | | | Publication date (day/month/year) |
|---|---|---|---|---|---|---|---|
| WO | 2023-003414 | A1 | 26 January 2023 | CN | 117694006 | A | 12 March 2024 |
| | | | | KR | 10-2024-0032840 | A | 12 March 2024 |
| | | | | US | 2023-0025259 | A1 | 26 January 2023 |
| WO | 2022-169046 | A1 | 11 August 2022 | EP | 4290970 | A1 | 13 December 2023 |
| | | | | KR | 10-2023-0136189 | A | 26 September 2023 |

Form PCT/ISA/210 (patent family annex) (July 2022)